# EUROPEAN PATENT APPLICATION

(11) **EP 4 683 269 A1**
(43) Date of publication of application: **21.01.2026**
(21) Application number: 24770269.9
(22) Date of filing: 05.02.2024
(51) Int. Cl.: H04L 9/08, G06F 21/31

(54) **INFORMATION PROCESSING DEVICE, INFORMATION PROCESSING SYSTEM, INFORMATION PROCESSING METHOD, AND PROGRAM**

(30) Priority: 16.03.2023 JP 2023042369
(71) Applicant: FeliCa Networks, Inc., Tokyo 141-0032 (JP)
(72) Inventor: TAKEUCHI, Yasuo, Tokyo 141-0032 (JP)
(74) Representative: D Young & Co LLP
(86) International application number: PCT/JP2024/003628
(87) International publication number: WO 2024/190149

(57) **Abstract**

The present disclosure is an information processing apparatus including: a storage unit that stores a user ID, a first SEID of a first information device before a change with respect to the user ID, and a second SEID of a second information device after a change with respect to the user ID; and a reissue request unit that transmits an issuance request for requesting a certificate issuer for a certificate stored in the first information device to the second information device having the second SEID stored in the storage unit.

## Description

### Field

The present disclosure relates to an information processing apparatus, an information processing system, an information processing method, and a program.

### Background

Conventionally, a reissuance flow related to an identity certificate involves having the certificate issued again by the certificate issuer. In the case of face-to-face, the user is confirmed to be the person himself/herself again by possession authentication (seal, resident certificate, driver's license, or the like) for issuing a certificate or knowledge authentication such as a password associated with the belongings, and the certificate is issued.

If it is online, reissuance is performed by applying some electronic Know Your Customer (eKYC) technology, an issued card, or the like.

### Citation List

### Patent Literature

Patent Literature 1: JP 2009-223685 A

### Summary

### Technical Problem

In a case where the user changes the model of a mobile terminal, the private key in the terminal (in particular, it is assumed to be stored in a secure element (SE)) cannot be moved. Therefore, it is necessary to recreate the certificate each time.

Additionally, since the certificate issuer has no reliable means to verify whether the certificate has been properly stored in the SE of the new terminal in conjunction with the deletion of the certificate on the old model, a new issuance procedure needs to be carried out again. Reissuance procedure of a single certificate is tolerable, but issuing a plurality of certificates causes inconvenience, discomfort, and frustration for the user, leading to issues such as abandonment or dropout during the process.

The present disclosure has been made in view of the above problems, and an object of the present disclosure is to provide an information processing apparatus, an information processing system, an information processing method, and a program capable of efficiently reissuing a certificate.

### Solution to Problem

According to the present disclosure, an information processing apparatus includes a storage unit that stores a user ID, a first SEID of a first information device before a change with respect to the user ID, and a second SEID of a second information device after a change with respect to the user ID, and a reissue request unit that transmits an issuance request for requesting a certificate issuer for a certificate stored in the first information device to the second information device having the second SEID stored in the storage unit.

### Brief Description of Drawings

FIG. 1 is a diagram for explaining a flow of certificate issuance in a face-to-face case.
FIG. 2 is a diagram for explaining a flow of certificate issuance in an online case.
FIG. 3 is a diagram illustrating a mobile phone in a state where two identity credentials are issued.
FIG. 4 is a diagram for explaining a model change of a conventional mobile phone.
FIG. 5 is a diagram illustrating a configuration of an identity credential management system according to a model change of a mobile phone according to the embodiment.
FIG. 6 is a diagram illustrating a database stored in an SE management server according to the embodiment.
FIG. 7 is a diagram illustrating SE management middleware of a mobile phone according to the embodiment.
FIG. 8 is a diagram illustrating an example of an SE management server-led model according to the embodiment.
FIG. 9 is a diagram illustrating an example of a wallet application-led model according to the embodiment.
FIG. 10 is a diagram illustrating an example of a certificate issuer-led model according to the embodiment.
FIG. 11 is a diagram illustrating an example of coping with model change in a state where an old terminal is present according to the embodiment.
FIG. 12 is a diagram for explaining the linkage between the behavior on the mobile phone side, the management state of the SE management server, and the certificate issuer according to the embodiment.
FIG. 13 is a diagram for explaining an example of coping with a model change in a case where a mobile phone before model change is broken or lost according to the embodiment.
FIG. 14 is a diagram for explaining a strict certificate issuance flow according to the embodiment.
FIG. 15 is a diagram for explaining processing performed by a certificate issuer according to the embodiment.
FIG. 16 is a diagram for explaining an issuance flow of a certificate issued to a mobile phone based on a public key certificate according to the embodiment.
FIG. 17 is a diagram for explaining an issuance flow of a certificate issued to a mobile phone based on a public key certificate having an SEID in addition to a root certificate according to the embodiment.
FIG. 18 is a diagram illustrating an example of a configuration of a database of an SE management server according to the embodiment.
FIG. 19 is a diagram illustrating another example of the configuration of the database of the SE management server according to the embodiment.
FIG. 20 is a diagram illustrating an example of an authentication method for a terminal according to the embodiment.
FIG. 21 is a diagram illustrating a relationship between each certificate and its key pair according to the embodiment.
FIG. 22 is a functional block diagram illustrating functions of the SE management server according to the embodiment.
FIG. 23 is a functional block diagram illustrating functions of the mobile phone according to the embodiment.
FIG. 24 is a timing chart for explaining an operation in the case of logging in via the wallet application of Device A according to the embodiment.
FIG. 25 is a timing chart for explaining an operation in the case of logging in via the wallet application of Device A according to the embodiment.
FIG. 26 is a timing chart for explaining an operation in the case of logging in via the browser of Device A according to the embodiment.
FIG. 27 is a timing chart for explaining an operation in the case of logging in via the browser of Device A according to the embodiment.
FIG. 28 is a timing chart for explaining an operation in a case where the document management states are synchronized (example: a case where digital identity credentials A and B are present) according to the embodiment.
FIG. 29 is a timing chart for explaining an operation in a case where the document management states are synchronized (example: a case where digital identity credentials A, B, and C are present) according to the embodiment.
FIG. 30 is a timing chart for explaining an operation in a case where the document management states are not synchronized according to the embodiment.
FIG. 31 is a timing chart for explaining an operation in the case of logging in via the wallet application of Device B according to the embodiment.
FIG. 32 is a timing chart for explaining an operation in the case of logging in via the wallet application of Device B according to the embodiment.
FIG. 33 is a timing chart for explaining an operation in the case of logging in via the browser of Device B according to the embodiment.
FIG. 34 is a timing chart for explaining an operation in the case of logging in via the browser of Device B according to the embodiment.
FIG. 35 is a timing chart for explaining an operation in a case of synchronizing a document management state according to the embodiment.
FIG. 36 is a timing chart for explaining an operation in the case of the SE management server-led model according to the embodiment.
FIG. 37 is a timing chart for explaining an operation in the case of the SE management server-led model according to the embodiment.
FIG. 38 is a timing chart for explaining an operation in the case of the SE management server-led model according to the embodiment.
FIG. 39 is a timing chart for explaining an operation in the case of batch synchronization of documents in the case of the wallet application-led model according to the embodiment.
FIG. 40 is a timing chart for explaining an operation in the case of batch synchronization of documents in the case of the wallet application-led model according to the embodiment.
FIG. 41 is a timing chart for explaining an operation in the case of batch synchronization of documents in the case of the wallet application-led model according to the embodiment.
FIG. 42 is a timing chart for explaining an operation in the case of batch synchronization of documents in the case of the wallet application-led model according to the embodiment.
FIG. 43 is a timing chart for explaining an operation in the case of the certificate issuer-led model according to the embodiment.
FIG. 44 is a timing chart for explaining an operation in the case of the certificate issuer-led model according to the embodiment.
FIG. 45 is a timing chart for explaining an operation in the case of the certificate issuer-led model according to the embodiment.
FIG. 46 is a hardware configuration diagram illustrating an example of a computer that implements the functions of the SE management server according to the embodiment.

### Description of Embodiments

Hereinafter, preferred embodiments of the present disclosure will be described in detail with reference to the accompanying drawings. Note that, in the present specification and the drawings, components having substantially the same functional configuration are denoted by the same reference signs, and redundant description is omitted. Note that the description will be given in the following order.
1. Overview of Present Disclosure
2. Conventional Certificate Issuance Flow
3. Embodiment
   3.1 Configuration of Information Processing System 101 According to Embodiment
   3.2 Middleware of Mobile Phone 3 of Information Processing System 101 According to Embodiment
   3.3 Model Example of Requesting Reissuance of Certificate
   3.4 Example of Coping With Model Change in State Where Old Terminal Is Present
   3.5 Example of Linkage Between User Operation and Management State of SE Management Server
   3.6 Example of Coping With Model Change in State Where Old Terminal Is Not Present
   3.7 Strict Certificate Issuance Flow
   3.8 Issuance State of Certificate Based on Public Key Certificate
   3.9 Issuance State of Certificate Based on Public Key Certificate With Vendor Information Added
   3.10 Revocation List Management
   3.11 Example of Evidence Material That Further Strengthens Degree of Reliability
   3.12 Information on Trust Source
   3.13 Data Held by Certificate Issuer 3.14 User Data in Wallet
   3.15 Functional Block Diagram
   3.16 Operation Description
   3.17 Hardware Configuration

### <1. Overview of Present Disclosure>

Currently, technical specifications of a certificate issuance/management/verification flow including attribute information called verifiable credential have been standardized in studies of ISO/IEC 18013-5 (mobile driver license) and ISO/IEC 23220 (eID functional block group).

In this technology, not all information of an issued certificate but personal information according to a use is disclosed by agreement of a user and a selective disclosure instruction by the user. At that time, the selective disclosure technology needs to generate a signature in association with a private key securely held in an SE, a trusted execution environment (TEE), or the like. Therefore, when the user changes the terminal, the private key associated with the SE or the TEE in the terminal cannot be relocated, and thus, it is necessary to reissue all the private keys.

The present disclosure provides a mechanism for reducing the burden on the user at the time of model change by using the ID (hereinafter referred to as "SEID") of the SE managed by the SE management server. The SEID is an identifier for uniquely identifying the SE. However, it is a value assigned by each vendor, and there is a case where uniqueness in the world (global) is not necessarily guaranteed. Therefore, when managing the SE, it is also possible to secure uniqueness in the world (global) by further adding information for identifying a vendor after using the SEID. The information for identifying the vendor may be held by middleware or an application of the terminal. In the present disclosure, an SE management server is provided in a certificate issuance/reissuance scheme, and reissuance of a certificate is realized without provision of identification data by a user again. In addition to the reliability of the SEID, it is possible to cope with security requirements of various certificate issuers (Issuer Authority) by incorporating a concept of certificates (Attestation).

For the digital identity certificate of the present disclosure, a key pair is created in a terminal and a signature is added in order to provide information only on an item permitted to be disclosed by the person himself/herself on the premise of the consent of the person himself/herself. The reliability of the signature is given by a certificate including a public key by an issuer of the certificate, and normally, the certificate is issued to a mobile terminal held by a party who has performed identification during a session.

### <2. Conventional Certificate Issuance Flow>

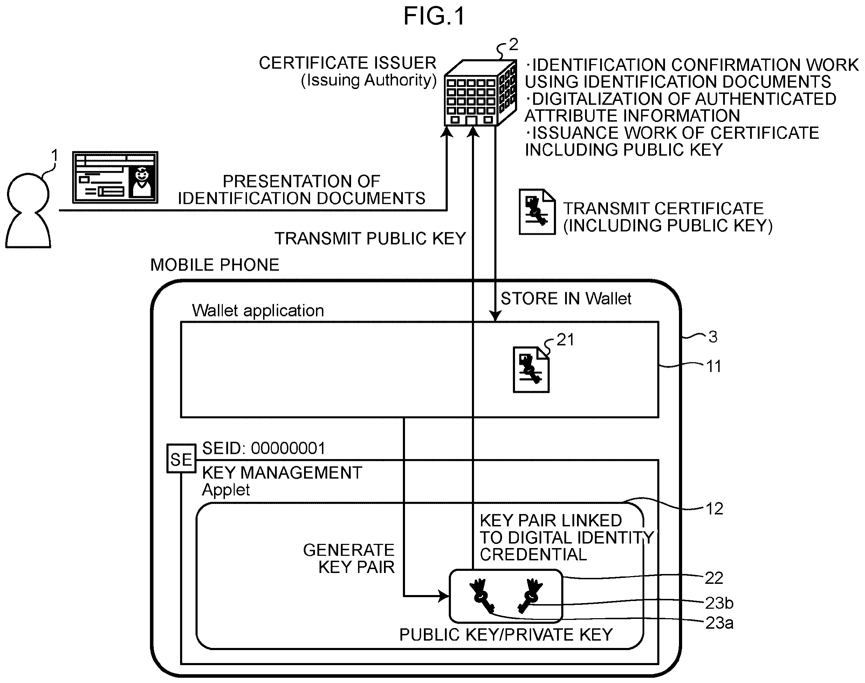

First, a flow of issuing a certificate in a face-to-face case will be described. FIG. 1 is a diagram for explaining a flow of certificate issuance in a face-to-face case. In FIG. 1, a user 1 is a person who wishes to issue a certificate to a mobile phone 3, and presents identification documents to a certificate issuer 2 (Issuing Authority).

When the identification documents are presented by the user 1 and a public key 23a is transmitted from the mobile phone 3, the certificate issuer 2 performs identification confirmation work using the identification documents, digitalization of attribute information of the authenticated identification documents, and issuance work of an identity credential 21 including the public key 23a.

The mobile phone 3 includes a wallet application 11 and a key management applet 12. In this case, since the mobile phone uses the SE to store the private key, the key management applet is stored in the SE. In a case of being realized by the TEE, it is called a key management trusted application and is stored in the TEE. The wallet application 11 is an application that operates as a wallet function of the mobile phone 3, and performs processes such as storing the identity credential 21 transmitted from the certificate issuer 2, instructing the key management applet 12 to generate a key pair, and transmitting the public key returned from the key management applet to the certificate issuer 2. The key management applet 12 is provided in the SE of the mobile phone 3, and performs processing of generating a key pair 22 including the public key 23a and a private key 23b linked with the identity credential 21, returning the generated public key 23a of the key pair 22 to the wallet application, and the like on the basis of an instruction to generate a key pair from the wallet application 11.

A chip having hardware tamper resistance is referred to as an SE, and a chip having only software tamper resistance is referred to as a TEE. However, in recent years, the boundary of the two has become smaller, and although not having complete tamper resistance, chips have appeared which exhibit the behavior of TEE while having the strength of SE to have hardware tamper resistance by externalizing only a chip portion having a function related to encryption processing. Such intermediate solution chips are also treated as TEE in this document.

In a case where a certificate is issued face-to-face, as illustrated in FIG. 1, the user 1 presents identification documents to the certificate issuer (Issuing Authority) 2.

In addition, from the mobile phone 3, the public key 23a of the key pair 22 having the public key 23a and the private key 23b stored in the key management applet 12 in the SE mounted on the mobile phone 3 is transmitted to the certificate issuer 2. The key management applet 12 is provided in the SE of the mobile phone 3, and generates the key pair 22 having the public key 23a and the private key 23b in a case of receiving a key pair generation instruction from the wallet application 11.

When the identification documents are presented by the user 1 and a public key 23a is transmitted from the mobile phone 3, the certificate issuer 2 performs identification confirmation work using the identification documents, digitalization of attribute information of the authenticated identification documents, and issuance work of an identity credential 21 including the public key 23a.

The identity credential 21 transmitted from the certificate issuer 2 to the mobile phone 3 is stored in a memory space called a wallet of the wallet application 11 of the mobile phone 3. In this way, the identity credential 21 is issued to the mobile phone 3.

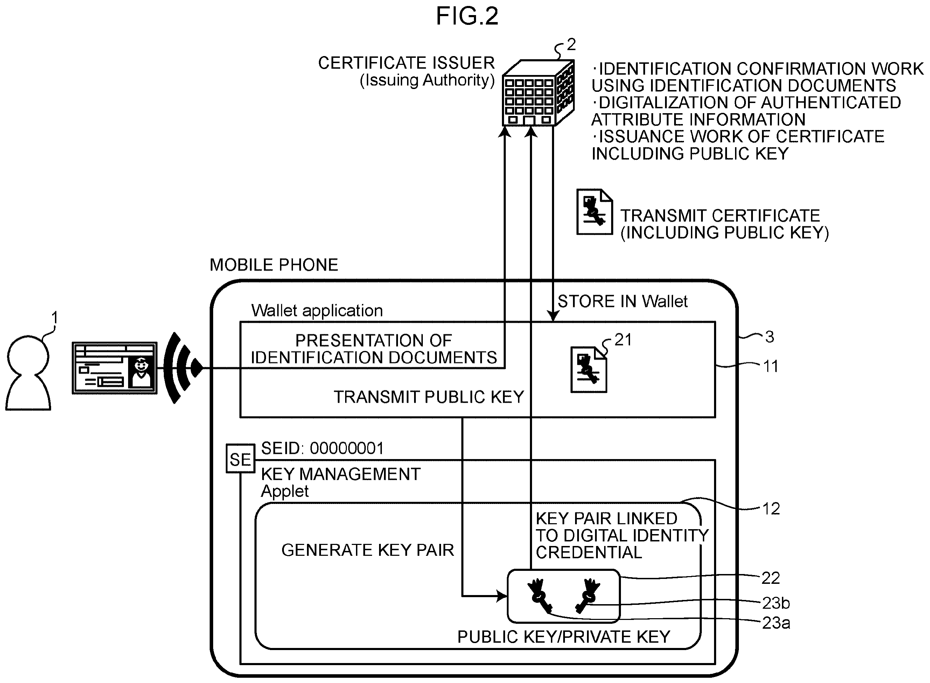

FIG. 2 is a diagram for explaining a flow of certificate issuance in an online case.

In the case of issuing a certificate online, as illustrated in FIG. 2, the user 1 presents identification documents to the certificate issuer 2 via the wallet application 11 of the mobile phone 3.

Thereafter, similarly to the face-to-face case illustrated in FIG. 1, the public key 23a of the key pair 22 having the public key 23a and the private key 23b stored in the key management applet 12 in the SE mounted on the mobile phone 3 is transmitted from the mobile phone 3 to the certificate issuer 2. The key management applet 12 is provided in the SE of the mobile phone 3, and generates the key pair 22 having the public key 23a and the private key 23b in a case of receiving a key pair generation instruction from the wallet application 11.

When the identification documents are presented by the user 1 and the public key is transmitted from the mobile phone 3, the certificate issuer 2 performs identification confirmation work using the identification documents, digitalization of attribute information of the authenticated identification documents, and issuance work of the identity credential 21 including the public key 23a. Here, the certificate issuer 2 includes a certificate issuer server (not illustrated). The certificate issuer server can communicate with the mobile phone 3 and a SE management server 33 via a network.

The identity credential 21 transmitted from the certificate issuer server of the certificate issuer 2 to the mobile phone 3 is stored in a memory space called a wallet of the wallet application 11 of the mobile phone 3. In this way, the identity credential 21 is issued to the mobile phone 3.

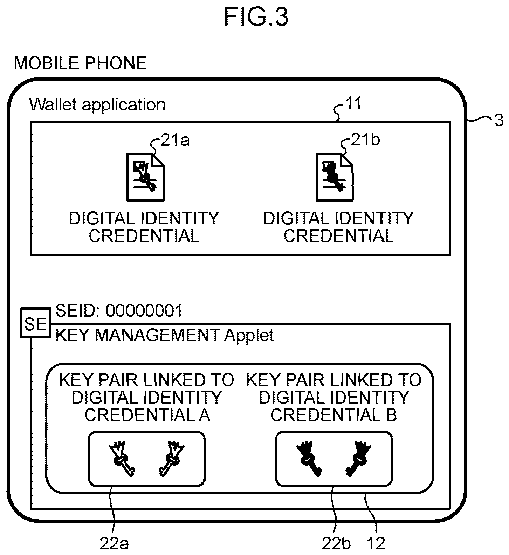

FIG. 3 is a diagram illustrating a state of the mobile phone 3 to which two identity credentials 21a and 21b have been issued.

As illustrated in FIG. 3, two digital identity credentials 21a and 21b are stored in the wallet application 11 of the mobile phone 3.

For the identity credential 21a and the identity credential 21b, for example, a plurality of certificates such as a digital driver's license, a digital student card, a digital employee card, and a digital eID are assumed to be stored in the wallet application 11. The "digital driver's license" is issued by the public safety commissions of the respective prefectures. The "digital student card" is issued by an educational foundation such as a university or a high school. The "digital employee card" is issued by a company. The "digital eID" is, for example, an identity certificate such as a My Number Card reflecting a basic resident register, and is issued by a government, a prefectural office, or each municipality.

The certificate described above is a certificate issued by each issuer to guarantee a different range (a license type, an identification of a student, and an identification of a company employee based on a resident certificate such as an address, a name, and an age).

In addition, a key pair 22a linked to the identity credential 21a and a key pair 22b linked to the identity credential 21b are generated and stored in the key management applet 12.

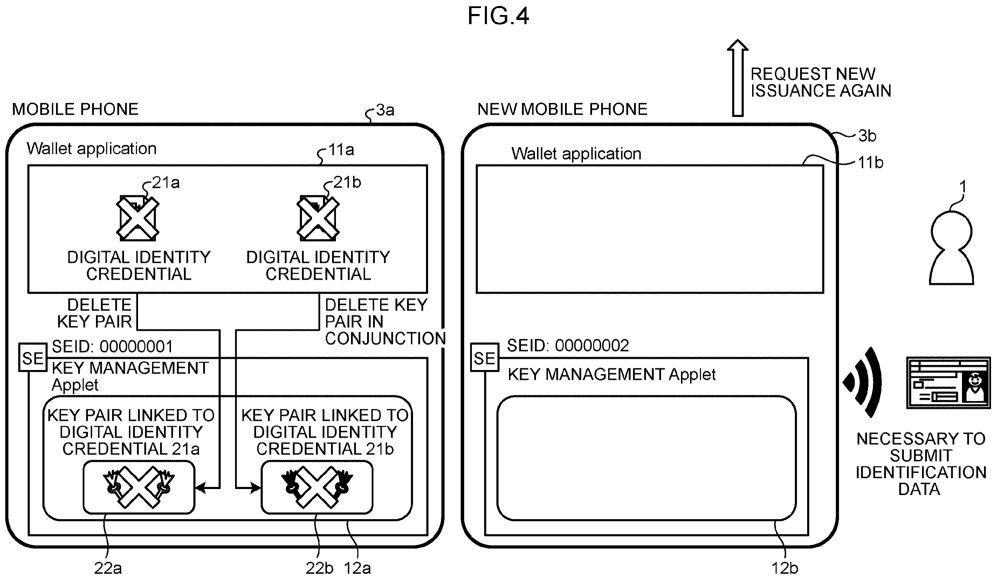

FIG. 4 is a diagram for explaining a model change of the conventional mobile phone 3.

As illustrated in FIG. 4, the digital identity credential 21a and the identity credential 21b stored in a wallet application 11a of a mobile phone 3a before the model change are deleted from the wallet application 11a by the user's own hand and cannot be used. In conjunction with the deletion of the identity credential 21a and the identity credential 21b, the wallet application 11a also deletes the key pairs 22a and 22b linked to the identity credential 21a and the identity credential 21b inside the SE.

Thereafter, a wallet application 11b of the new mobile phone 3b after the model change requests the certificate issuer (not illustrated) to newly issue the certificate again. In addition, at this time, it is also necessary to provide identification documents from the wallet application 11b to the certificate issuer (not illustrated). When a new certificate issuance request is accepted by the certificate issuer, the identity credential 21 for which the new issuance request has been made is stored in the wallet application 11b of the mobile phone 3b after the model change.

### <3. Embodiment>

### <3.1 Configuration of Information Processing System 101 According to Embodiment>

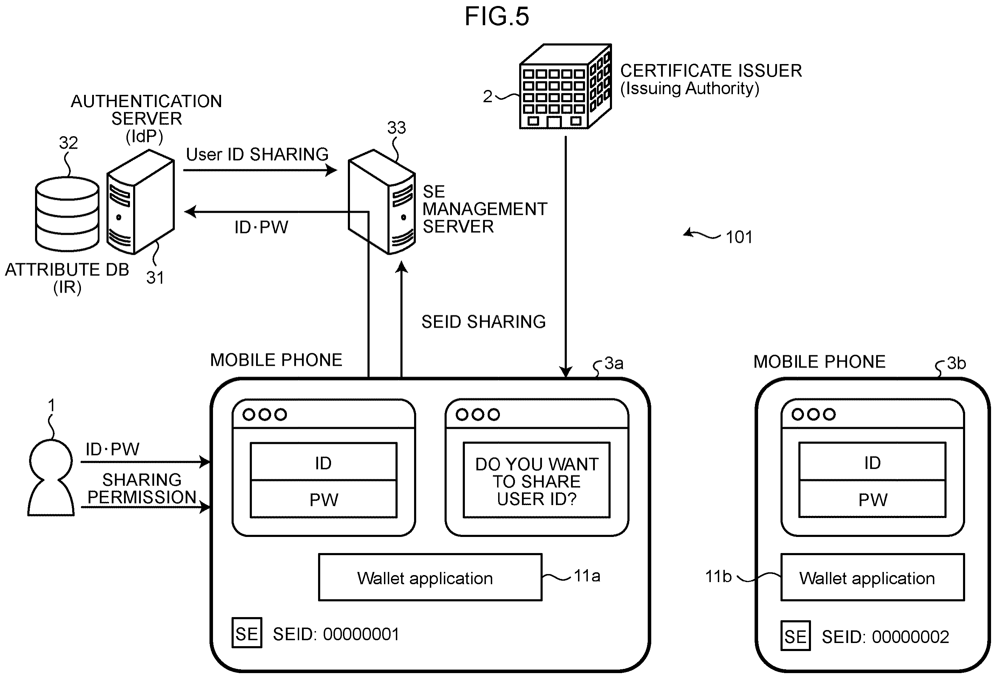

FIG. 5 is a diagram illustrating a configuration of an information processing system 101 according to the model change of the mobile phone 3a according to the embodiment.

As illustrated in FIG. 5, the information processing system 101 includes an authentication server 31, an attribute database 32, an SE management server 33, a mobile phone 3a, and a mobile phone 3b.

In FIG. 5, the mobile phone 3a indicates a mobile phone before a model change, and an SE is mounted. Each SE has an ID (SEID: 00000001) for identification uniquely numbered. Hereinafter, the ID of the SE is abbreviated as SEID. The mobile phone 3b indicates a mobile phone after a model change, and has an ID (SEID: 00000002) of the SE. The SE is incorporated in a mobile phone and is responsible for high-security processing not possessed by the mobile phone. Examples of the SE include an embedded SE and an SE incorporating functions of a UICC and a SIM, including an insertion type. In this document, although the shape is not particularly limited, an embedded SE is assumed and described.

The authentication server 31, the attribute database 32, the SE management server 33, the mobile phone 3a, and the mobile phone 3b are connected to each other via a network. The certificate issuer 2 is connected to the SE management server 33, the mobile phone 3a, and the mobile phone 3b via a network. The network may be wired or wireless.

The authentication server 31 is a server that authenticates a user ID and a password. The authentication server 31 shares the user ID with the SE management server 33. In a case where privacy is protected, the user ID may be a hash value based on the user ID.

The attribute database 32 is connected to the authentication server 31 and stores a user ID, a password, and the like transmitted from the authentication server 31.

The above case is introduced in a case where the user ID and the password are managed by the authentication server 31 and the attribute database 32, but it is also applicable to a case where the user ID and the password are managed by an IC card, a hardware wallet (HWW), or an SE stored in another terminal. The authentication server merely enables one business operator operating the platform to use an ID that logs in commonly to a terminal to which the platform OS is applied, and in the words of the Open ID Foundation which is an industry association, the wallet application is a Relaying Party, and the authentication server operates as an Open ID Provider. From the concept of using as an online service, versatility is higher in a case where the authentication server is placed on the web, but in a case where the user changes the model by changing the platform, the ID is not on the same platform, and thus there is a case where the authentication server cannot be applied. Therefore, the user holds the secure device such as the IC card having the secure chip described above as a reliable anchor, creates a reliable chain by associating the device that is likely to change the model with the anchor, and switches and manages the device at the time of the model change, whereby the continuous chain can be maintained. Therefore, it is based on a user ID, and means that a method for accessing the user ID is not limited to implementation on a server, but can be implemented on other media and devices.

By using proximity communication of BLE, near field communication of NFC, or communication accompanied by distance measurement using Ultra Wide Band (UWB), it is possible to recognize whether a terminal before a model change and a terminal desired to be changed for are near to each other, and thus, it is also possible to use the communication instead of user authentication. That is, it is possible to simplify or omit the user authentication by using the fact that the devices exist at a communicable distance or the fact that the devices exist at a prescribed distance as a reliability point.

In addition, in a case where the platform is switched and realized, the FIDO alliance, which is an industry association, displays a QR code (registered trademark) for connecting from a browser in a collated state with the authentication server via Bluetooth as a technology called cloud-assisted Bluetooth Low Energy (caBLE) or Hybrid, and a camera on a device such as a mobile phone on which another platform OS is mounted reads the QR code to take over the authentication state. Switching between platforms can be smoothly realized by newly registering a key from the browser on the platform side which has taken over. In this way, the user ID trusted by the SE management server 33 can be used in association with the user ID of another platform. Therefore, it can be indicated that the user ID is not limited to the ID of a specific platform.

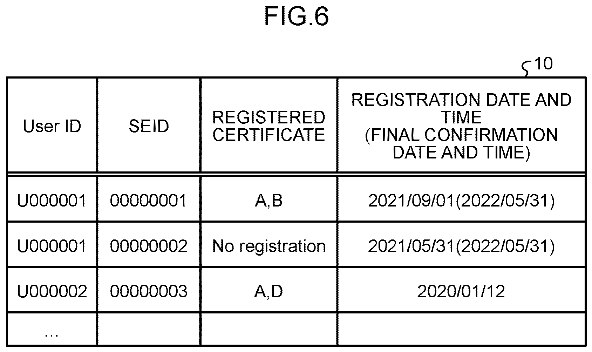

The SE management server 33 manages the user ID of the mobile phone 3, the SEID, the registered certificate, the registration date and time of the certificate, and the final confirmation date and time. The registration date and time of the certificate is the first registration date and time of the certificate. The final confirmation date and time manages the time when the server confirms the state of the certificate of the mobile phone 3. If there is no confirmed timing after the access at the time of registration, only the registration date and time is managed. Regarding the registered certificate, the SE management server 33 can acquire information in communication with the mobile phone 3 or the wallet application 11 in the mobile phone 3, and the entity of the registered certificate and the identification information of the certificate correspond thereto. The SEID is an identification ID of the SE of the mobile phone 3. The SE management server 33 can acquire the SEID held by the SE of the mobile phone 3 in communication with the mobile phone 3, the wallet application 11 in the mobile phone 3, or the key management applet connected from the wallet application 11 in the mobile phone 3. FIG. 6 is a diagram illustrating the database 10 stored in the SE management server 33 according to the embodiment. As illustrated in FIG. 6, the SE management server 33 stores the user ID of the mobile phone 3, the SEID of the SE, the registered certificate, the registration date and time of the certificate, and the final confirmation date and time.

FIG. 6 illustrates that the SEID of the SE of the mobile phone to which the user with the user ID "U000001" is logged in is "00000001", the certificate "A" and the certificate "B" are registered in the wallet application 11, and the registration date and time and the final confirmation date and time in parentheses are "2021/09/01 (2022/05/31)". It is indicated that the SEID of the SE of the mobile phone to which the user with the user ID "U000001" is logged in is "00000002", a certificate is not currently registered in the wallet application 11, and the registration date and time at that time and the final confirmation date and time in parentheses are "2021/05/31 (2022/05/31)". It is indicated that the SEID of the SE of the mobile phone to which the user with the user ID is "U000002" is logged in is "00000003", the certificate "A" and the certificate "D" are registered in the wallet application 11, and the registration date and time is "2020/01/12". In this case, although the final confirmation date and time is not illustrated, the registration date and time and the final confirmation date and time are the same, and thus is omitted. In the case of description in which duplication is allowed, the registration date and time and the final confirmation date and time in parentheses are the same time, and become "2020/01/12 (2020/01/12)".

The certificate issuer 2 issues a certificate to the SEID of the user ID of which the certificate issuance request is output from the SE management server 33.

In FIG. 5, when the user ID and the password are input in the wallet application 11a of the mobile phone 3a before the model change, the input user ID and password are input to the authentication server 31 via the SE management server 33, and authentication is performed.

When the authentication is performed, a message "Do you want to share user ID?" is displayed on the wallet application 11a. When the user approves sharing, the authentication server 31 shares the user ID with the SE management server 33. In a case where the authentication fails, the user ID is not shared.

In addition, the mobile phone 3a shares the SEID "00000001" of the SE of the mobile phone 3a with the SE management server 33. The mobile phone 3b has the wallet application 11b having a function similar to that of the wallet application 11a of the mobile phone 3a, and shares the SEID "00000002" of the SE of the mobile phone 3b with the SE management server 33.

<3.2 Middleware of Mobile Phone 3 of Information Processing System 101 According to Embodiment>

In the mobile phone 3 of the embodiment, as a configuration for accessing the SE, SE management middleware 61 that performs access management to the SE is provided instead of directly accessing the SE from the wallet application 11.

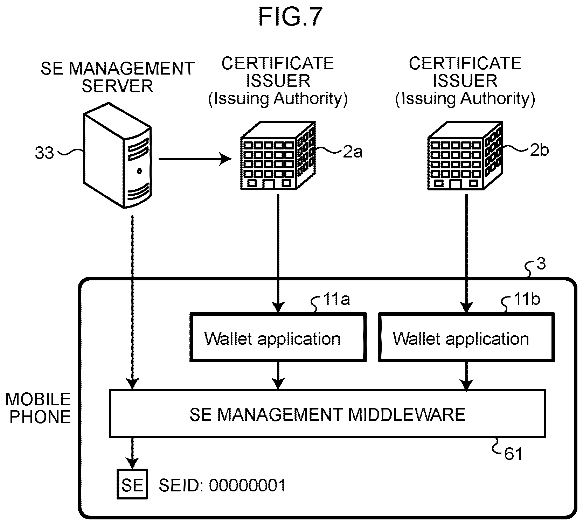

FIG. 7 is a diagram illustrating the SE management middleware 61 of the mobile phone 3 according to the embodiment. In FIG. 7, a wallet application 11a corresponding to a certificate issuer 2a and a wallet application 11b corresponding to a certificate issuer 2b are stored in the mobile phone 3.

The SE management middleware 61 is common middleware that is responsible for access to the SEs from the wallet application 11a, the wallet application 11b, and the SE management server 33.

By placing the common SE management middleware 61 between the SE and the wallet application 11a, the wallet application 11b, and the SE management server 33, it is possible to construct a common platform corresponding to the plurality of wallet applications 11a and 11b.

Although there is a solution in which the number of the wallet applications 11 is limited to one in the mobile phone 3, it is desirable to prepare the SE management middleware 61 in a case where various vendors prepare the wallet applications 11 and implement a solution for managing certificates by each wallet application 11.

In addition, by directly performing secure communication with the SE with the SE management server 33, the SE management middleware 61 can perform SE management without being affected by the process of the wallet application 11, can improve security and break away from troublesome process management, and does not need to implement unnecessary SE management on the wallet application 11 side. Therefore, it is also useful in that SE management can be centralized and delegated to the SE management middleware 61.

### <3.3 Model Example of Requesting Reissuance of Certificate>

There are the following three models as a model for requesting reissuance of a certificate.

### 1. SE management server 33-led model

This is a model in which the SE management server 33 cooperates with the certificate issuer 2 and the wallet application 11 to adjust the reissuance of the certificate, and is a model in which an ideal state of the certificate to be realized as the issuance policy of the SE management server 33 is realized by a push type. An example of an issuance policy is forcibly ensuring that only one terminal holds the certificate, even when the certificate being intended for issuance on only one device where the user is logged in is found in a plurality of terminals where the user is logged in. For example, it is same as when the user linked to a call application logs in a plurality of terminals, the call application cannot be activated or data cannot be browsed in the terminals other than the terminal that has logged in last. On the contrary, an issuance policy in which it is determined that there is no problem even if the certificate is held by a plurality of terminals can be adopted. This model can also be said to be a model that fully trusts the SE management state held by the SE management server 33.

### 2. Wallet application 11-led model

The wallet application 11 is a model that individually cope with the intention of the user such as individually selecting the relocation to the new terminal or selecting collective relocation when there is a plurality of issued certificates in response to the execution request from the user. The wallet application 11 is a model that requests the SE management server 33 to provide the SEID information from the SE management server 33 to the certificate issuer 2, thereby performing adjustment so that the identification confirmation performed by the certificate issuer 2 is unnecessary again. In addition, by checking information on "what trust source (trust anchor) it was issued with" included in the issued certificate, it is possible to provide a function of performing an update operation of an existing certificate on behalf of the user when the certificate serving as the trust source needs to be updated.

### 3. Certificate issuer 2-led model

This is a model in which the certificate issuer 2 takes the lead and makes an adjustment so that the certificate issuer 2 itself can continuously guarantee the reliability of the issued certificate, such as making a reissue request in accordance with a periodic update request of the certificate issued by the certificate issuer 2 or the update of the identity credential of the public institution that has become the trust source of the certificate (a case where revocation information from other certificate issuers and the like also need to be updated). It is a model that acquires information from the SE management server 33 and requests the wallet application 11 to reissue based on past issuance information.

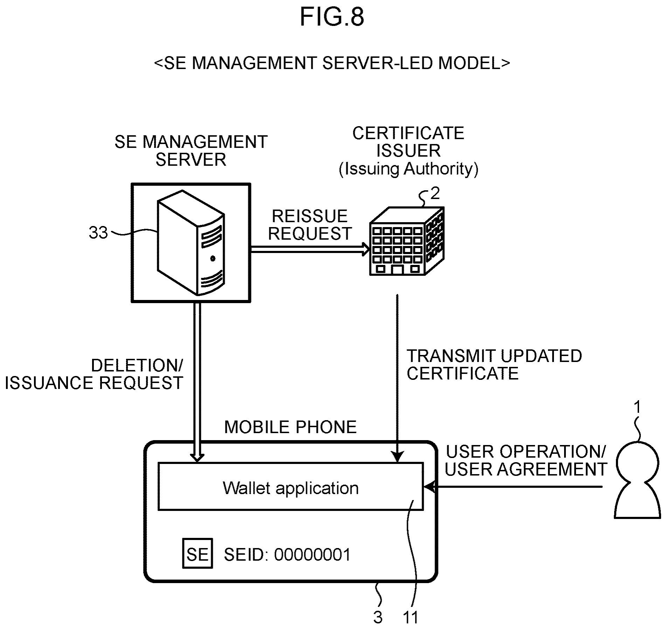

FIG. 8 is a diagram illustrating an example of the SE management server 33-led model according to the embodiment. In the SE management server 33-led model, as illustrated in FIG. 8, the SE management server 33 outputs a reissue request to the certificate issuer 2. In addition, the SE management server 33 outputs a certificate deletion and issuance request to the wallet application 11 of the mobile phone 3. The certificate issuer 2 outputs the updated certificate to the mobile phone 3 on the basis of the reissue request from the SE management server 33.

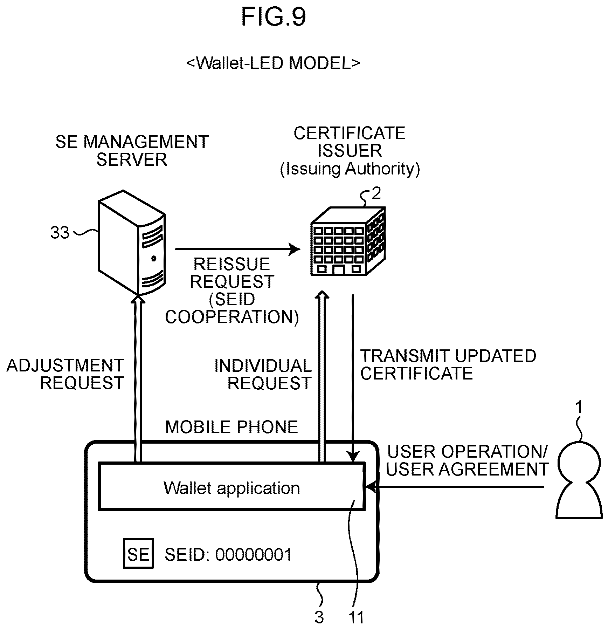

FIG. 9 is a diagram illustrating an example of the wallet application 11-led model according to the embodiment. In the wallet application 11-led model, as illustrated in FIG. 9, the wallet application 11 of the mobile phone 3 transmits a certificate reissuance adjustment request to the SE management server 33. The adjustment request is a request as to which certificate to adjust in a case where a plurality of certificates is stored in the wallet application 11. The SE management server 33 outputs a reissue request linked with the SEID to the certificate issuer 2 on the basis of the adjustment request from the wallet application 11. In addition, the wallet application 11 individually requests the certificate issuer 2 to transmit the updated certificate. Since there is a reissue request from the SE management server 33, the individual request from the wallet application 11 is not necessarily performed. The certificate issuer 2 outputs the updated certificate to the mobile phone 3 on the basis of the reissue request from the SE management server 33 and the individual request transmitted from the mobile phone 3.

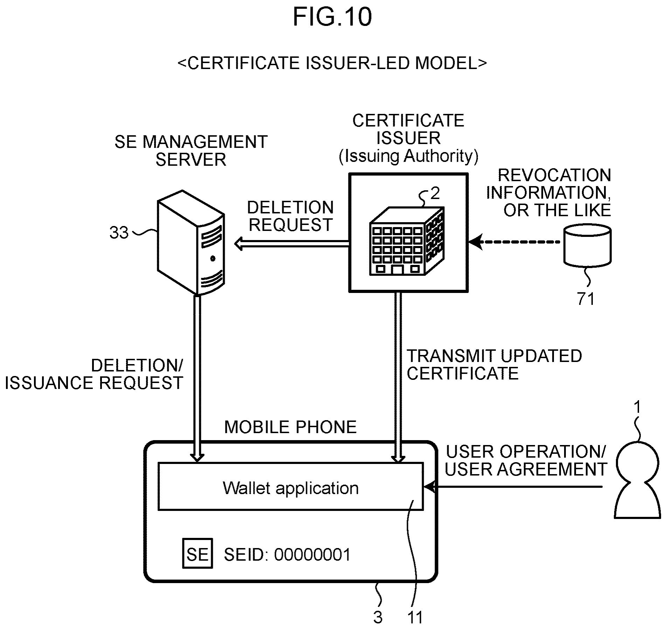

FIG. 10 is a diagram illustrating an example of a certificate issuer 2-led model according to the embodiment. In the certificate issuer 2-led model, as illustrated in FIG. 10, the certificate issuer 2 outputs a certificate deletion request described in a revocation list 71 indicating revocation information of the certificate and the like to the SE management server 33. The SE management server 33 outputs a certificate deletion and issuance request to the wallet application 11 of the mobile phone 3 on the basis of the deletion request output from the certificate issuer 2. The certificate issuer 2 outputs the updated certificate to the mobile phone 3 on the basis of the reissue request from the mobile phone 3.

### <3.4 Example of Coping With Model Change in State Where Old Terminal Is Present>

Next, a model change to the mobile phone 3b in a state where the mobile phone 3a before the model change is present will be described.

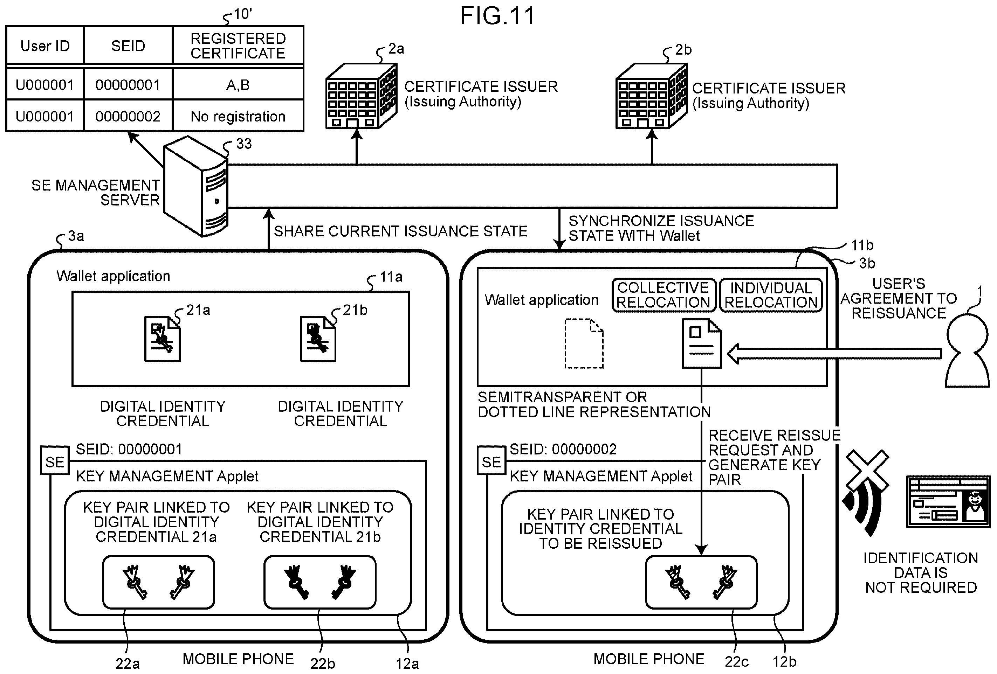

FIG. 11 is a diagram illustrating an example of coping with a model change in a state where the old terminal is present according to the embodiment. As illustrated in the database 10 of the SE management server 33 of FIG. 11, the mobile phone 3a before the model change and the mobile phone 3b after the model change and the issuance state of the current registered certificate are shared in a database 10'. Specifically, the SE management server 33 stores the user ID "U000001", the SEID "00000001", and the certificates A and B for the registered certificate for the mobile phone 3a. In addition, the SE management server 33 stores the user ID "U000001", the SEID "00000002", and the fact that the registered certificate is not registered for the mobile phone 3b.

A key pair 22a and a key pair 22b having a public key and a private key are stored in the SE (SEID "00000001") of the mobile phone 3a by a key management applet 12a. The key pair 22a is a key pair linked to the identity credential 21a (certificate A). The key pair 22b is a key pair linked to the identity credential 21b (certificate B).

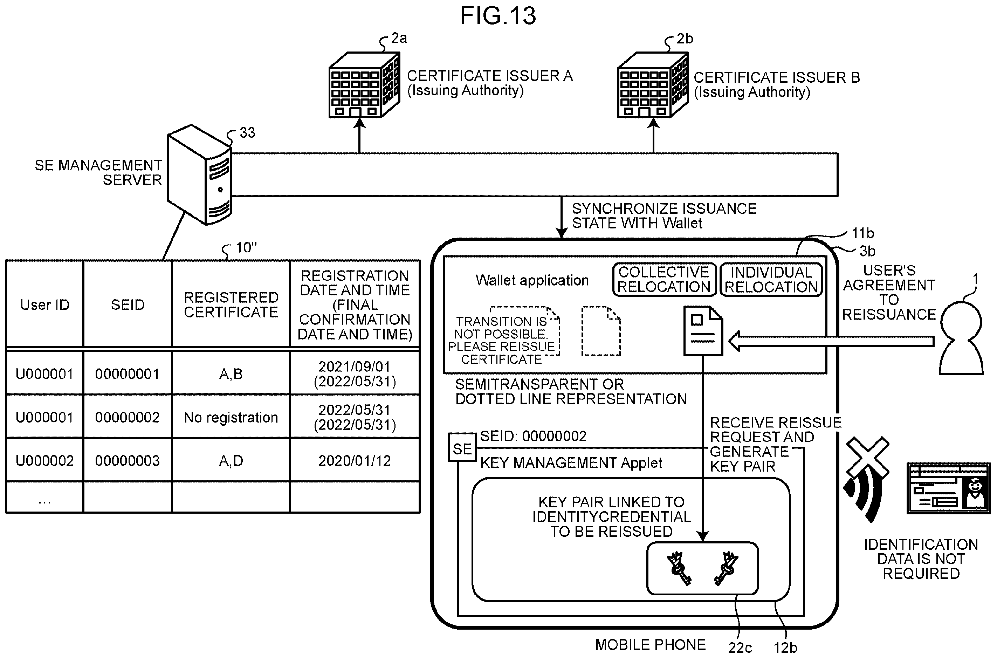

The wallet application 11b of the mobile phone 3b is synchronized with the database 10'' of the SE management server 33 illustrated in FIG. 13, and displays the identity credential 21a and the identity credential 21b registered in the mobile phone 3a as indicated by semitransparent or dotted lines, for example. The reason why the expression of semitransparent or dotted lines is used in the embodiment is that by implicitly notifying the user that there is no data in the mobile phone but there is registered data in the database 10, the user can take an action to be taken next. Any form of expression that draws the user's attention or prompts recall, such as adding messages or icons like "!", is acceptable, and the embodiment is not limited to the expressions described above.

The user 1 selects a certificate to be relocated from the displayed identity credential 21a and identity credential 21b. At this time, it is also possible to collectively relocate the identity credential 21a and the identity credential 21b or individually relocate them.

When the user 1 selects the identity credential 21 to be relocated, a reissue request is output from the wallet application 11b to a key management applet 12b. The key management applet 12b generates a key pair 22c in the key management applet 12b in response to the reissue request. The mobile phone 3b transmits the generated public key of the key pair 22c to the certificate issuer 2 that issues the selected identity credential, thereby receiving the reissued identity credential.

In such a shift of the identity credential 21, the mobile phone 3b can transfer the identity credential 21 without requiring identification data.

### <3.5. Example of Linkage Between User Operation and Management State of SE Management Server>

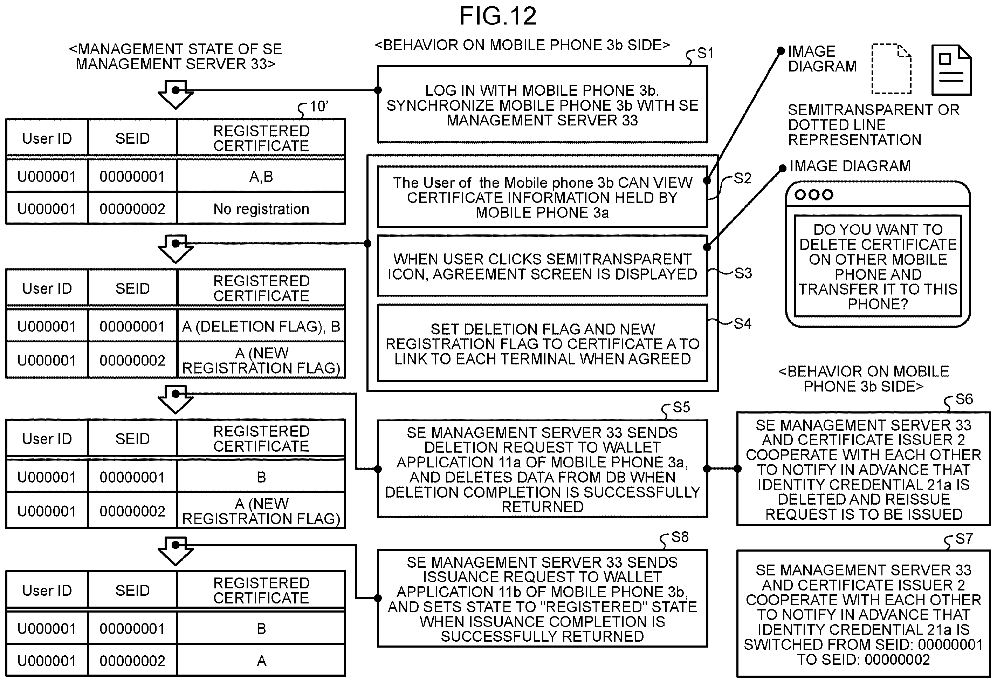

FIG. 12 is a diagram for explaining the linkage between the behavior on the mobile phone 3b side, the management state of the SE management server 33, and the certificate issuer 2 according to the embodiment.

The login is performed with the mobile phone 3b, and the mobile phone 3b is synchronized with the SE management server 33 (step S1). Then, the user of the mobile phone 3b (user ID "U000001") can view the certificate information registered in the SEID "00000001" of the mobile phone 3a in the database 10' of the SE management server 33 (step S2). Specifically, the user of the mobile phone 3b can see that the state of the registered certificate registered in the SE management server 33 is the identity credential 21a (certificate A) and the identity credential 21b (certificate B) (see the image diagram of step S2). Whether the identity credential 21a (certificate A) and the identity credential 21b (certificate B) described herein are present in the mobile phone 3b can be determined by, for example, transmitting the data of the certificate itself to the SE management server for collation or transmitting part of the data of the certificate to the SE management server for collation. The SE management server may be used to temporarily store the held certificate at the timing when the user logs out the terminal. In this case, the certificate is deleted from the terminal held by the user at the timing when the user logs out, and the certificate expected by the user is stored in the SE management server. At the timing of login again, the SE management server writes the held certificate back to the terminal. In such a case, the certificate may be stored in the SE management server, but it is not always necessary to store the certificate in the server. In a case where a storage area for holding and managing a large number of certificates is insufficient, it is conceivable that the SE management server manages only the serial number and the document number extracted from the certificates. Unless otherwise specified, the identity credential 21a (certificate A) and the identity credential 21b (certificate B) are identified from the information read from the serial number extracted from the certificate, and it is determined from the information that the wallet application holds the identity credential 21a (certificate A) and the identity credential 21b (certificate B) in the terminal held by the user in the SE management server. It is also conceivable that the SE management server itself does not check the certificate but lists the identity credential information managed by the wallet application and notifies the SE management server of the list. In the listing, serial numbers and document numbers extracted from certificates are assumed to be listed in Comma Separated Values (CSV) format or JavaScript Object Notation (JSON) format.

When the user of the mobile phone 3b clicks the semitransparent or dotted icon displayed on the mobile phone 3b, the agreement screen is displayed (step S3). In FIG. 11, an icon displayed by a solid line in the wallet application 11b indicates a semitransparent icon. The same applies to the icon displayed in FIG. 12. On the agreement screen, as illustrated in FIG. 12, a message such as "Do you want to delete the certificate on the other mobile phone and transfer it to this phone?" is displayed, for example.

When the user of the mobile phone 3b agrees, the deletion flag and the new registration flag are set in the identity credential 21a (certificate A) corresponding to the SEID "00000001" and the SEID "00000002" in order to cooperate with the respective mobile phones 3a and 3b (step S4). The SE management server 33 sends a deletion request to the wallet application 11a of the mobile phone 3a, and deletes the data from the database 10' when the deletion completion is successfully returned (step S5). In addition, the SE management server 33 and the certificate issuer 2 cooperate with each other, the state of the identity credential 21a (certificate A) of the SE management server 33 is deleted, and the SE management server 33 notifies the certificate issuer 2 in advance that a reissue request will be issued (step S6). Note that there is also a method of more strictly notifying the certificate issuer 2 of the SEID (described later).

In addition, the SE management server 33 and the certificate issuer 2 cooperate to notify the certificate issuer 2 in advance that the identity credential 21a is switched from the SEID: 00000001 to SEID: 00000002 (step S7).

The SE management server 33 sends an issuance request to the wallet application 11b of the mobile phone 3b, and when the issuance is successfully completed, the state is set to the "registered" state (step S8).

### <3.6. Example of Coping With Model Change in State Where Old Terminal Is Not Present>

FIG. 13 is a diagram for explaining an example of coping with the model change in a case where the mobile phone 3a before the model change is broken or lost according to the embodiment.

As illustrated in FIG. 13, the database 10'' of the SE management server 33 stores the user ID of the mobile phone 3, the SEID, the registered certificate, the registration date and time of the certificate, and the final confirmation date and time.

In a case where the mobile phone 3a before the model change is broken or lost, permission for reissuance is output from the certificate issuer 2 onto the database 10" held by the SE management server 33.

In a case where the mobile phone 3a before the model change is broken or lost, the extent to which the certificate is restored from old registration information is determined by the certificate issuer 2. This determination is made on the basis of, for example, the registration date and time and the final confirmation date and time stored in the database of the SE management server 33. Alternatively, depending on the expiration date of the certificate, it may be determined that the expiration date has already expired, or depending on the remaining days, the issuance policy has been violated, and the certificate should not be transferred. Depending on the determination of the certificate issuer 2, the corresponding certificate is displayed as "not transferrable" on the mobile phone 3b.

The operation of the wallet application 11b is similar to that described with reference to FIG. 11. Specifically, the wallet application 11b of the mobile phone 3b is synchronized with the database 10'' of the SE management server 33, and displays the identity credential 21a and the identity credential 21b registered in the mobile phone 3a as semitransparent or dotted lines.

The user 1 selects a certificate to be relocated from the displayed identity credential 21a and identity credential 21b. At this time, it is also possible to collectively relocate the identity credential 21a and the identity credential 21b.

When the identity credential 21 to be relocated is selected from the user 1, a reissue request is output from the wallet application 11b, and the key pair 22c is generated in the key management applet 12b by the key management applet 12b. The wallet application 11b transmits the generated public key of the key pair 22c to the certificate issuer 2 that issues the selected identity credential, thereby receiving the reissued identity credential.

### <3.7 Strict Certificate Issuance Flow>

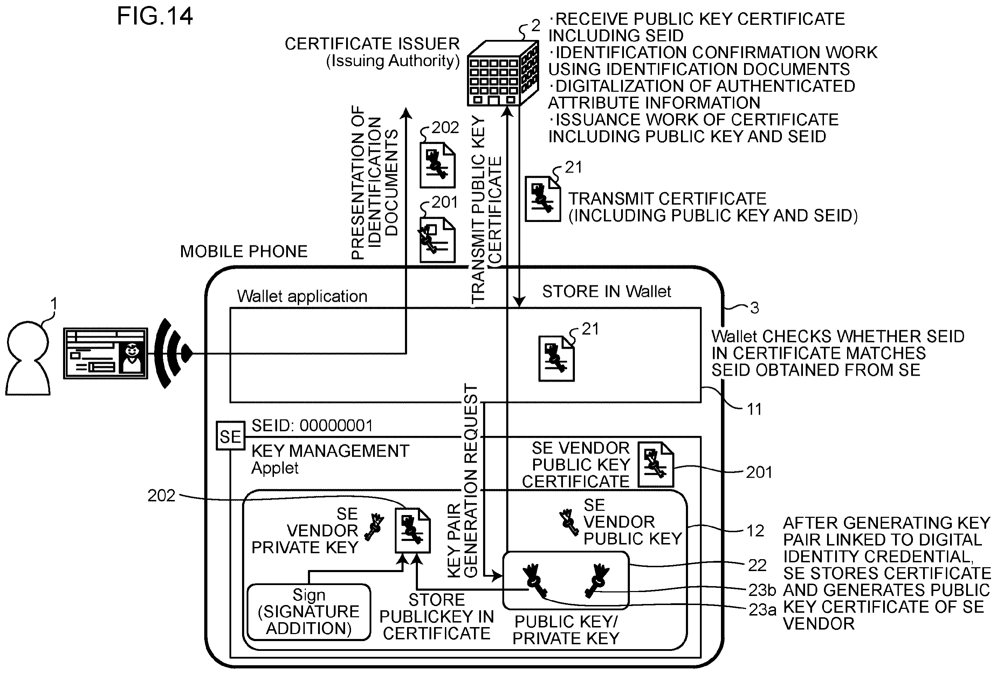

Next, a case where a certificate issued to the mobile phone 3 is strictly issued will be described. FIG. 14 is a diagram for explaining a strict certificate issuance flow according to the embodiment.

In a case where a certificate is issued online, as illustrated in FIG. 14, the user 1 presents identification documents to the certificate issuer 2 via the wallet application 11 of the mobile phone 3. As illustrated in FIG. 1, identification documents may be directly presented to the certificate issuer 2.

From the mobile phone 3, a public key certificate including the SEID among the key pair 22 having the public key 23a and the private key 23b stored in the key management applet 12 in the SE of the mobile phone 3 is transmitted to the certificate issuer 2. The key management applet 12 is stored in the SE of the mobile phone 3, and generates a key pair 22 having a public key 23a and a private key 23b in a case of receiving a key pair generation instruction from the wallet application 11. The key management applet 12 stores the public key 23a in the certificate format, and assigns a signature using the "SE vendor private key stored by the SE vendor at the time of factory shipment" held by the SE. The SE vendor also stores the SE vendor public key paired with the SE vendor private key and the SE vendor public key certificate 201 which is the public key certificate thereof in the SE. The SE assigns a signature to the signature target data including the generated public key 23a and the SEID using the SE vendor private key, and sets a combination of the signature target data including the public key 23a and the SEID and the generated signature as the public key certificate 202. The public key certificate 202 generated by the SE is returned from the key management applet 12 to the wallet application 11. At that time, the wallet application 11 also acquires the SE vendor public key certificate from the SE, and transmits two public key certificates of the public key certificate 202 and the SE vendor public key certificate 201 generated by the SE to the certificate issuer 2.

When identification documents are presented by the user 1 and a public key certificate including the public key 23a and the SEID is transmitted from the mobile phone 3, the certificate issuer 2 performs identification confirmation work using the identification documents, digitalization of attribute information of the authenticated identification documents, and issuance work of the identity credential 21 (certificate) including the public key 23a and the SEID. As a premise of the issuance processing, the certificate issuer 2 confirms the correctness of the public key 23a by the following procedure.

First, in order to confirm correctness of the SE vendor public key certificate, the SE vendor is inquired and a root certificate of the SE vendor is ordered (not illustrated). By using this root certificate, the correctness of the signature of the SE vendor public key certificate can be confirmed, and the public key (α: tentatively assigned) included in the SE vendor public key certificate having the correct signature can be reliably used. Next, since the correctness of the signature of the public key certificate generated by the SE can be confirmed by the public key (α), the public key 23a included in the public key certificate having the correct signature can be trusted.

The identity credential 21 transmitted from the certificate issuer 2 to the mobile phone 3 is stored in the wallet of the wallet application 11 of the mobile phone 3 by the wallet application 11 in a case where the SEID in the certificate matches the SEID acquired from the SE. In this way, the identity credential 21 is issued to the mobile phone 3. In a case where they do not match, the identity credential 21 is not stored in the wallet application 11 of the mobile phone 3, and an error message is displayed as mismatching.

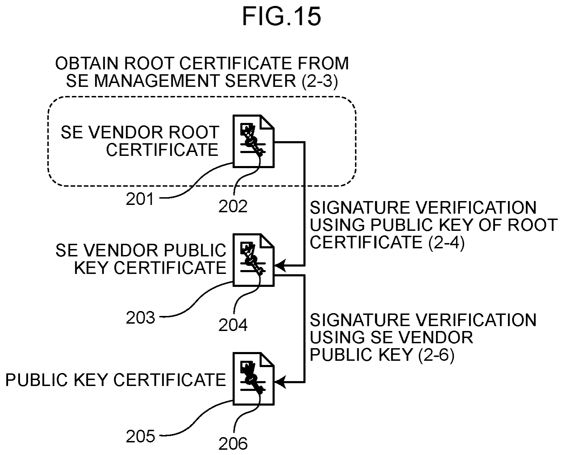

A strict certificate issuing process is as follows. Hereinafter, processing performed by the SE and processing performed by the certificate issuer 2 will be separately described.
1. Processing performed by key management Applet in SE (external: following operation is performed in response to command operation from wallet application 11)
   1-1. Generate key pair (private key/public key): if not strict, perform only this processing and output public key
   1-2. Prepare format of public key certificate
   1-3. Register public key in certificate format
   1-4. Register SEID in certificate format
   1-5. Assign signature to certificate data to be signed using private key prepared by SE vendor
   1-6. Output signed public key certificate from SE
   1-7. Output together with vendor public key certificate
2. Processing performed by certificate issuer 2
   FIG. 15 is a diagram for explaining processing performed by the certificate issuer 2 according to the embodiment.
   2-1. Receive signed public key certificate
   2-2. Confirm SEID assigned in certificate
   2-3. Request SE vendor root certificate 201 from SE management server 33 on basis of SEID
   2-4. Verify SE vendor public key certificate 201 using the public key certificate 202 of SE vendor root certificate 201
   2-5. When signature verification succeeds successfully, public key 204 of SE vendor of signature verified SE vendor public key certificate 203 can be trusted
   2-6. Verify public key certificate 205 output from SE using public key 204 of SE vendor public key certificate
   2-7. When signature verification succeeds successfully, public key 206 of SE can be trusted
   2-8. If signature verification succeeds successfully, SEID in public key certificate 205 is also trusted

Therefore, the SEID can be trusted to include the SEID when the digital certificate is issued.

### <3.8 Issuance State of Certificate Based on Public Key Certificate>

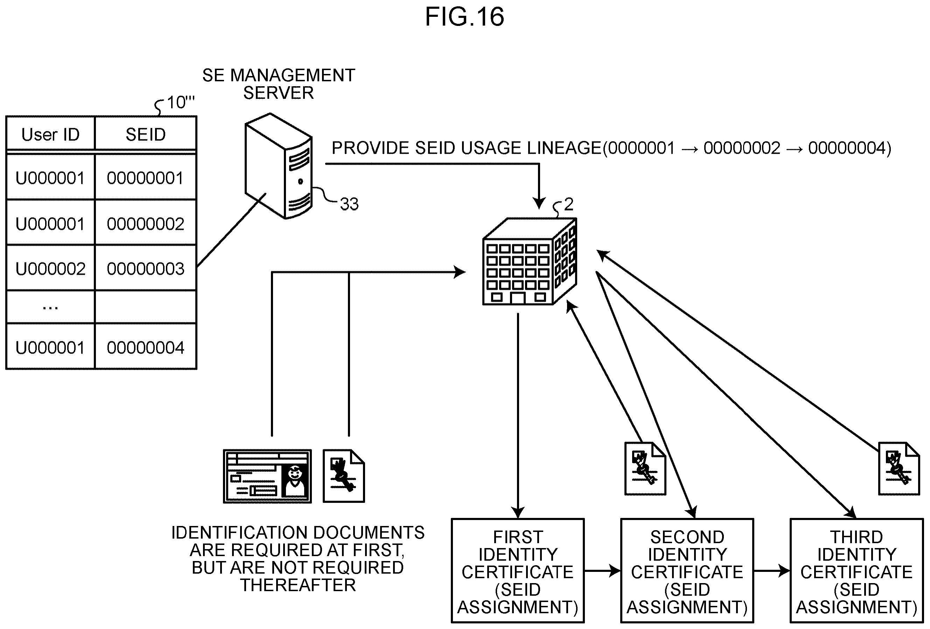

FIG. 16 is a diagram for explaining an issuance flow of a certificate issued to the mobile phone 3 based on a public key certificate having an SEID according to the embodiment.

As illustrated in FIG. 16, in a database 10‴ of the SE management server 33, SEIDs "00000001", "00000002", and "00000004" are associated with a user ID ("U000001"). This indicates a database of a state at the time when three terminals having different SEIDs are changed in model and the third identity certificate is issued.

Therefore, the SE management server 33 can provide the certificate issuer 2 with the lineage of the SEID of the user. For example, for the user ID ("U000001"), the lineage of the SEID "00000001" → "00000002" → "00000004" is provided to the certificate issuer 2.

For example, for the user ID ("U000001"), as illustrated in FIG. 14, the certificate issuer 2 issues, to the mobile phone 3, a first identity certificate whose SEID included in the public key certificate is "00000001".

Next, in a case where the model of the mobile phone 3 is changed to a new terminal equipped with the SE having the SEID "00000002", the SEID "00000001" → "00000002" is associated with the user ID ("U000001") in the database 10‴ of the SE management server 33. In a case where the identity certificate is synchronized with each other, the certificate issuer 2 confirms that the SEID lineage of the user, the SEID included in the public key certificate, and the SEID "00000002" of the user ("U000001") provided from the SE management server 33 match, and confirms that the model has been changed from the SEID "00000001" to the SE having the SEID "00000002". Therefore, the certificate issuer 2 issues a second identity certificate including the SEID "00000002" to the mobile phone 3 after the model change. The identification documents are necessary at first, but is unnecessary for issuance of an identity certificate at the time of model change.

Next, in a case where the model of the mobile phone 3 is changed to a new terminal equipped with the SE having the SEID "00000004", the SEID "00000001" → "00000002" → "00000004" is associated with the user ID ("U000001") in the database 10‴ of the SE management server 33. In a case where the identity certificate is synchronized with each other, the certificate issuer 2 confirms that the SEID lineage of the user, the SEID "00000004" included in the public key certificate, and the SEID of the user ("U000001") provided from the SE management server 33 match, and confirms that the model has been changed from the SEID "00000002" to the SE having the SEID "00000004". Therefore, the certificate issuer 2 issues a third identity certificate including the SEID "00000004" to the mobile phone 3 after the model change. The identification documents are necessary at first, but is unnecessary for issuance of an identity certificate at the time of model change.

### <3.9 Issuance State of Certificate Based on Public Key Certificate With Vendor Information Added>

In addition to <3.8>, vendor information is added to a public key certificate having an SEID, and management is performed more strictly. The SE assigns vendor information to each SEID in consideration of being made by each chip vendor. The vendor information is information indicating a company that has manufactured the SE, and is used to obtain a root certificate by confirming a vendor that has performed signature addition of a public key certificate. For example, if the root certificate can be uniquely identified only by the vendor name, only the vendor name is sufficient. However, in a case where the vendor changes the root certificate for each product, the vendor information indicates information of an identifier indicating the root CA, a URL (or URI) indicating a location of the root certificate itself, and information such as a mail address or a telephone number for making contact with the root CA.

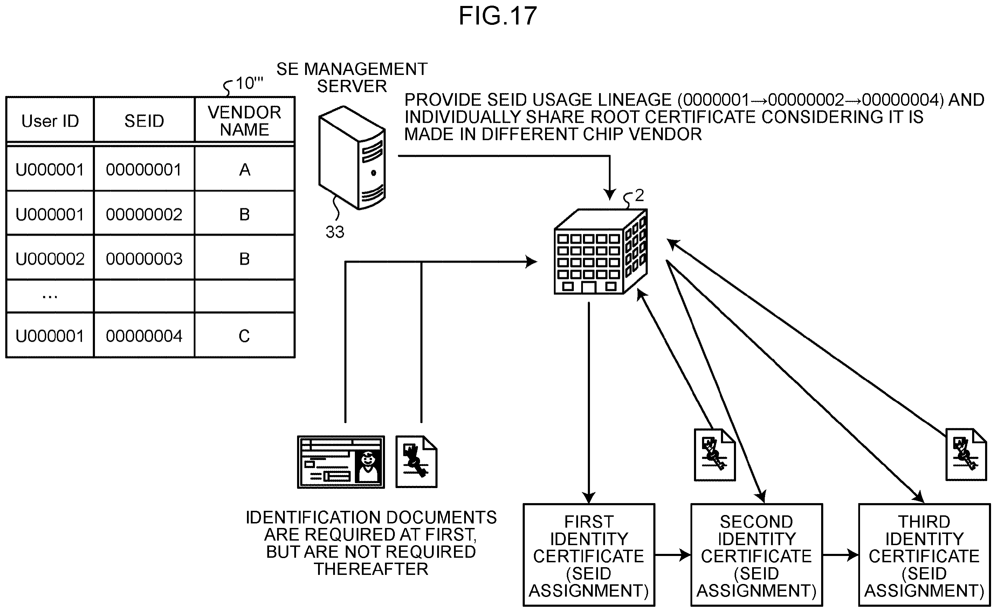

FIG. 17 is a diagram for explaining an issuance flow of a certificate issued to the mobile phone 3 based on a public key certificate having SEID in addition to vendor information according to the embodiment.

As illustrated in FIG. 17, in a database 10‴ of the SE management server 33, SEIDs "00000001", "00000002", and "00000004" are associated with a user ID ("U000001"). This illustrates a database of states at the time of issuance of the third identity certificate.

Further, the SEID "00000001" is associated with the vendor name of the vendor A and the root certificate of the vendor A, the SEID "00000002" is associated with the vendor name of the vendor B and the root certificate of the vendor B, and the SEID "00000004" is associated with the vendor name of the vendor C and the root certificate of the vendor C.

For example, for the user ID ("U000001"), as illustrated in FIG. 14, the certificate issuer 2 issues, to the mobile phone 3, a first identity certificate whose SEID included in the public key certificate is "00000001".

Next, in a case where the model of the mobile phone 3 is changed to a new terminal equipped with the SE having the SEID "00000002", the SEID "00000001" → "00000002" is associated with the user ID ("U000001") in the database 10‴ of the SE management server 33. In a case where the identity certificate is synchronized with each other, the certificate issuer 2 confirms that the SEID lineage of the user, the SEID included in the public key certificate, and the SEID "00000002" of the user ("U000001") provided from the SE management server 33 match, confirms that the root certificate included in the public key certificate is the vendor B, and confirms that the model has been changed from the SEID "00000001" to the SE having the SEID "00000002". Therefore, the certificate issuer 2 issues a second identity certificate including the SEID "00000002" to the mobile phone 3 after the model change. By causing the SE management server to share that the root certificate is the vendor B, it is possible to reduce a mistake of mistaking the root certificate of the SE vendor used in the flow for confirming the correctness of the signature of the SE vendor public key certificate with another vendor, and reduce a risk of using a wrong root certificate due to an invalid certificate. The identification documents are necessary at first, but is unnecessary for issuance of an identity certificate at the time of model change.

In a case where the model of the mobile phone 3 is changed to a new terminal equipped with the SE having the SEID "00000004", the SEID "00000001" → "00000002" → "00000004" is associated with the user ID ("U000001") in the database 10‴ of the SE management server 33. In a case where the identity certificate is synchronized with each other, the certificate issuer 2 confirms that the SEID lineage of the user, the SEID included in the public key certificate, and the SEID of the user ("U000001") provided from the SE management server 33 match, confirms that the root certificate included in the public key certificate is the vendor C, and confirms that the model has been changed from the SEID "00000002" to the SE having the SEID "00000004". Therefore, the certificate issuer 2 issues a third identity certificate including the SEID "00000004" to the mobile phone 3 after the model change. By causing the SE management server to share that the root certificate is the vendor C, it is possible to reduce a mistake of mistaking the root certificate of the SE vendor used in the flow for confirming the correctness of the signature of the SE vendor public key certificate with another vendor, and reduce a risk of using a wrong root certificate due to an invalid certificate. The identification documents are necessary at first, but is unnecessary for issuance of an identity certificate at the time of model change.

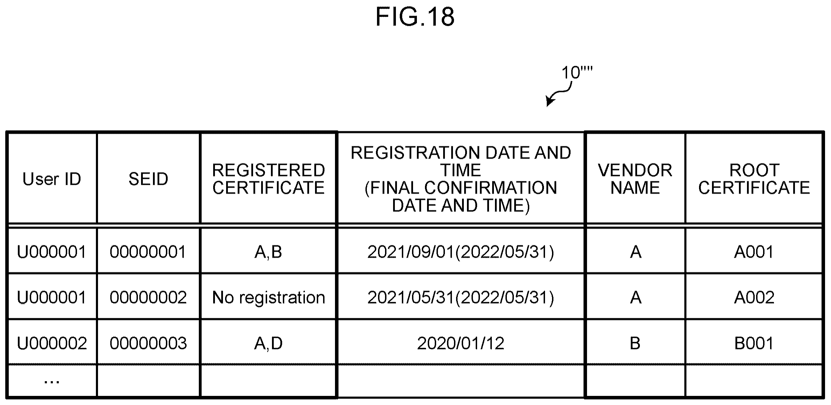

FIG. 18 is a diagram illustrating an example of a configuration of the database 10ʺʺ of the SE management server 33 according to the embodiment. As illustrated in FIG. 18, the database 10ʺʺ of the SE management server 33 stores the user ID, the SEID, the registered certificate, the registration date and time and the final confirmation date and time, the vendor name, and the root certificate.

The information of the "user ID", the "SEID", and the "registered certificate" is the minimum configuration of the SE management server 33. The "registration date and time (final confirmation date and time)" is information for recovery at the time of terminal loss or failure that realizes <3.6. Example of Coping With Model Change in State Where Old Terminal Is Not Present>. The "vendor name" and the "root certificate" are information necessary when performing <3.7 Strict Certificate Issuance Flow>. In a case where the root certificate is uniquely known from the vendor name, the information of the root certificate is unnecessary.

FIG. 18 illustrates that the registered certificate "A, B" is registered for the SEID "00000001" with the user ID "U000001", the registration date and time and the final confirmation date and time in parentheses are "2021/09/01) 2022/05/31)", the vendor name is A, and the root certificate "A001" is registered. For the SEID "00000002" with the user ID "U000001", it is indicated that no certificate is registered, the registration date and time and the final confirmation date and time in parentheses are "2021/05/31) 2022/05/31)", the vendor name is A, and the root certificate "A002" is registered. This indicates that the registered certificate "A, D" is registered for the SEID "00000003" with the user ID "U000002", the registration date and time is "2020/01/12", the vendor name is B, and the root certificate "B001" is registered in a state where confirmation is not performed thereafter.

By using the vendor name and the root certificate, the certificate issuer 2 can issue an identity certificate (since it is a certificate for the attribute information of the user including the public key with respect to the public key transmission from the user, it can be said to be a public key certificate in a broad sense or an attribute certificate of the user) after verifying the signature of the SE vendor public key certificate.

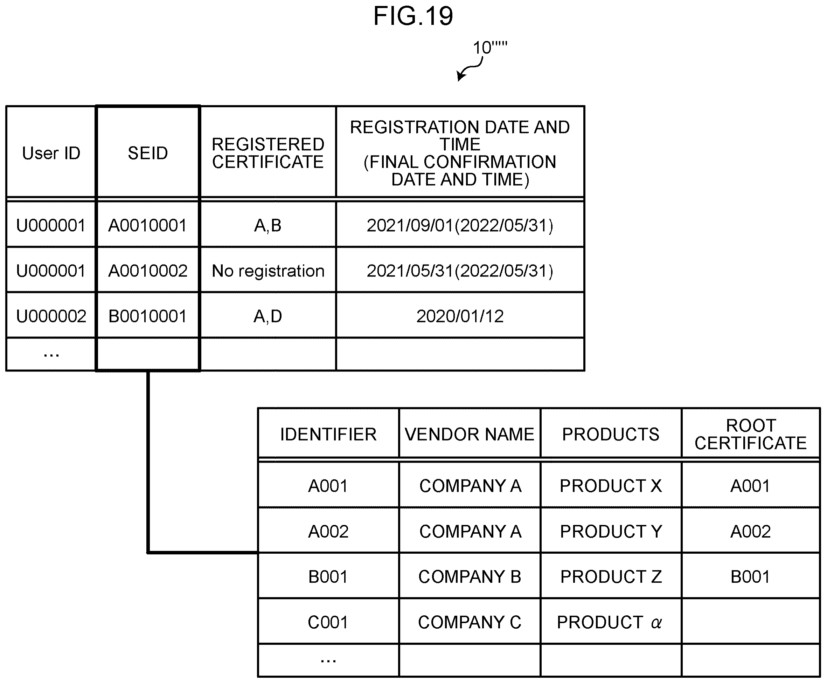

FIG. 19 is a diagram illustrating another example of the configuration of the database 10‴ʺ of the SE management server 33 according to the embodiment. As illustrated in FIG. 19, information for identifying a vendor and a product may be added to the SEID.

As illustrated in FIG. 19, a case where the head of the SEID is an identifier is exemplified. A table in which a vendor name, a product, and a root certificate can be searched based on the identifier is included. In FIG. 19, since the SEID "A0010001" includes the identifier "A001", it is possible to search for the vendor name "A company", the product "product X", and the root certificate "A001" by using the separate table. Since the identifier "A001" is included in the SEID "A0010002", the vendor name "A company", the product "product X", and the root certificate "A001" can be searched similarly to the SEID "A0010001". On the other hand, since the SEID "B0010001" includes the identifier "B001", it is possible to search for the vendor name "B company", the product "product Z", and the root certificate "B001".

The certificate issuer 2 can issue an identity certificate (public key certificate or attribute certificate) after verifying the signature of the SE vendor public key certificate by using information of the vendor name, the product, and the root certificate from the identifier included in the SEID. This table is useful not only when the vendor name is changed, but also in a case where the root certificate is changed on a product basis or a destination basis.

The information managed by the SE management server illustrated here is merely an example, and data for verifying the validity of the SE vendor public key certificate is within the scope of assumption of the present embodiment.

### <3.10 Revocation List Management>

Even if the certificate is left in the terminal for model change or is correctly deleted, it is necessary for the verifier to manage the revocation list in consideration of the fact that the certificate can be presented. The revocation list is referred to as a certificate revocation list (CRL).

In the embodiment, the certificate issuer 2 manages the revocation list in the certificate issuer-led model. The certificate issuer 2 manages the revocation list by the following method.

### 1. Download and locally check CRL file

This is a method in which a verifier of the certificate issuer 2 accesses a certificate authority (CA), downloads a latest CRL file, and compares the latest CRL file with a serial number in the certificate.

### 2. Check online each time

This is a method in which a verifier of the certificate issuer 2 performs an online check by an online certificate status protocol (OCSP) and confirms validity in real time.

In a case where a certificate included in the revocation list has been issued based on trust, the certainty of the certificate fluctuates, and thus updating may be necessary. For example, in a case where a student card is issued based on a resident certificate, it is conceivable that the student card is also invalidated (reissued) in a case where the resident certificate which has been a trust source is invalidated. Therefore, it is desirable that a certificate issuer that issues a certificate based on another certificate confirms the revocation list.

### <3.11 Example of Evidence Material That Further Strengthens Degree of Reliability>

In the embodiment, it is also possible to use the following authentication, and it is possible to further strengthen the reliability by combining each authentication.

### 1. Authentication of Platformer ID

Identification is performed by including a combination of ID and PW (knowledge authentication). Security can also be enhanced by performing two-factor authentication by entangling possession authentication such as one time password (OTP) using short messaging service (SMS) on a mobile phone.

### 2. Authentication using Authenticator

By confirming a certificate stored by a manufacturer at the time of manufacturing a product with respect to an authenticator certified by FIDO Alliance which is an industry association, it is possible to confirm that the device is authenticated by FIDO Alliance, and identification is performed by possession authentication of the device and biometric authentication using a sensor or the like of the device.

### 3. Authentication using Platform Authenticator

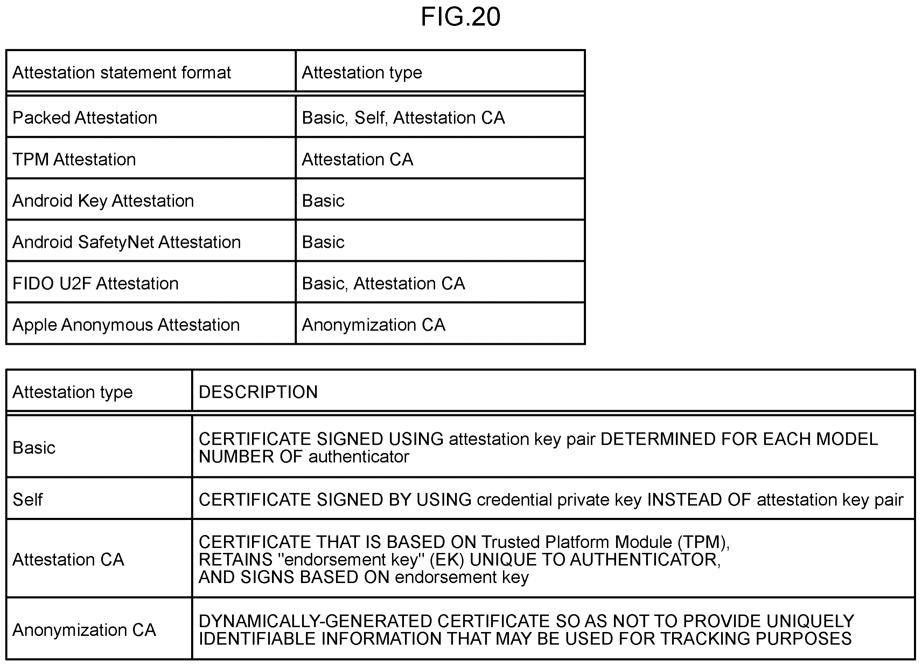

The reliability of the terminal itself is confirmed by confirming that the platform itself on which the OS such as Android SafetyNet attestation or Apple Anonymous attestation is mounted is not tampered. Further, by executing the authentication method defined by FIDO Alliance using the trusted OS, it is possible to confirm whether the OS is the trusted OS. FIG. 20 is a diagram illustrating an example of an authentication method for a terminal on which each platform is mounted according to the embodiment. It is defined in the Web Authentication specification (https://www.w3.org/TR/webauthn/) defined by W3C, which is a non-profit organization that standardizes Web technologies.

### 4. Confirmation of authenticity using key given to SE (confirmation that SE is manufactured by correct issuing process)

Since mutual authentication can be performed between the authentication key registered in the SE and the server or the reader/writer, the SE can be trusted. In this case, the registered authentication key can be confirmed by using the SE vendor private key stored by the above-described SE vendor at the time of factory shipment, the SE vendor public key corresponding thereto, and the certificate thereof. Further, the private key information may be private key information set from the beginning by a vendor related to the issued profile at the time of factory shipment. In this case, since it is asked whether the secret information is known, the type of the encryption algorithm to be used may be a common key encryption method other than the public key encryption method. For example, in a case where an individualized AES key that is a derivative key derived from a master key of AES that is a common key encryption method is registered in the SE, when authentication can be performed using this key, a vendor that has set the key or is involved can recognize that the SE is correct.

### 5. Verify signature assigned to certificate

By verifying the signature included in the certificate with a trusted public key, the certificate can be trusted as it confirms the possession of a valid certificate.

6. There is also a certification method for confirming that a root certificate of a public key for verifying signatures attached to a plurality of certificates results in one.

The signature of the public key certificate issued to the public key for verifying the signature given to the digital identity certificate of the user is trusted because the signature can be verified with the same root public key.

7. The transition is performed after it is confirmed whether each SE has an equivalent reliability level using Trustworthiness Information held by the SE. The reliability level is also referred to as a level of confidence, and is numerical or leveled as a starting point of the reliability information. This information is given by the resistance to vulnerability expressed by the Common Criteria (CC) defined by ISO/IEC 15408, the granularity and test contents of logical evidence materials on the resistance, and the results thereof. For example, the evaluation may be expressed by a grade from 1 to 7 in an evaluation assurance level (EAL). Additionally, in a case where a system has achieved the highest level in Advanced methodical Vulnerability Analysis (AVA_VAN) Level 5 in vulnerability analysis or possesses other positive factors beyond the standard indicators of each EAL, these should be considered as additional points. Therefore, it is desirable to have an expression that can quantify or rank such positive factors, in addition to the pure grading. For example, the expression 4, 4+, 5, 5+ may be used, but the positive factor may be specified as 4, 4+AVA_VAN.5 or the like so that the positive factors can be compared. It is conceivable that the transition is allowed if the chips have obtained certification equal to or higher than the SE used first.

For example, it is also possible to apply the certification program that the FIDO Alliance is conducting on authenticators. The authentication performed with Touch ID on iOS or the Keystore on Android is the lowest Level 1 (L1), and the authentication of the USB token using the chip that has obtained the CC certification is the highest Level 3 plus (L3+). Such levels may be used.

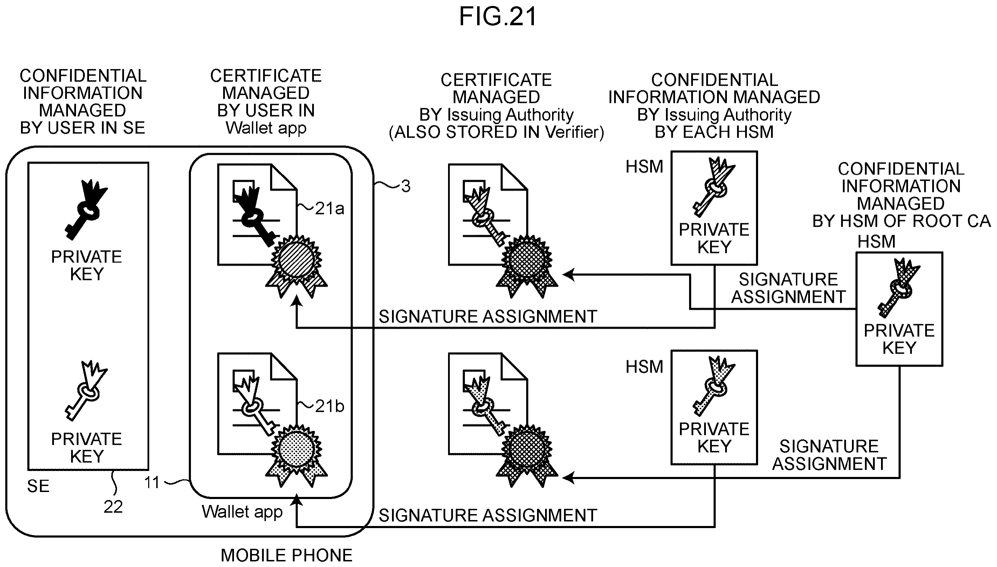

FIG. 21 is a diagram illustrating a relationship between each certificate and its key pair according to the embodiment. FIG. 21 is a diagram for explaining that the number of root certificates of a public key for verifying signatures attached to a plurality of certificates results in one. The root CA (certificate authority) is a role that serves as a trust source of a certificate issued by a certificate issuer, and issues a public key certificate called a root certificate self-certifying by the root CA itself. Therefore, the root CA also manages a private key for adding a signature. As illustrated in FIG. 21, two private keys are managed in the SE of the mobile phone 3. The wallet application 11 stores two identity credentials 21a and 21b to which signatures are respectively given using private keys managed by a hardware security module (HSM) of the certificate issuer 2. The HSM is an apparatus and equipment for strictly managing keys so as not to leak private keys, and a certificate issuer and a root CA appearing this time are based on a premise that the private keys are managed by the HSM. The HSM is an example because private keys can be stored and managed in a device or a chip having hardware tamper resistance other than the HSM.

In addition, the certificate issuer 2 is given a signature by a private key managed by the HSM of the root CA, and stores two public key certificates corresponding to the two private keys managed by the HSM of the certificate issuer 2. These two public key certificates are also stored in the verifier of the certificate issuer 2. That is, since the two public key certificates stored by the certificate issuer 2 are given signatures with the private keys managed by the HSM of the root CA, it can be seen that all distributed certificates have been split from one root CA. Therefore, this is a model in which the reliability of the entire certificates is improved rather than relying on the state in which the root CAs are different. Of course, even in a state in which the root CAs are different, there is no issue as long as each root CA is individually trusted through a process.

### <3.12 Information on Trust Source>

Since each certificate can include information indicating what is the starting point of the trust, it is also possible to determine whether or not the certificate can be trusted on the basis of the information in the certificate.

For example, it is assumed that the first certificate uses the passport as the trust source, and the second certificate uses the driver's license as the trust source. In this case, when the driver's license is updated as the trust source, the second certificate can be regarded as the update timing. Although such an operation is not currently performed, it is assumed that maintenance related to reliability information will be required in the future.

Since the following two types of data described in the certificate are mixed, it is of course necessary to reissue the certificate when the original data changes, but the secondary source is desirably updated dynamically as the original data changes.

Since the contents of the certificate and the issuance update information of the certificate can be grasped by the SE management server 33, the linkage update of the certificate can be performed in cooperation with one update by linking the contents of the certificate and the issuance update information of the certificate. This is considered as a secondary effect because it can be implemented in a form similar to the model change method.

As evidence from an authoritative source, it is necessary to be the original source of information. The resident certificate address is based on the basic resident register managed by each municipality, and "resident certificate", "My Number Card", and the like issued therefrom serve as evidence.

As evidence from secondary sources, information from sources other than the original source of the information is necessary. The address described in the driver's license is a secondary source. The authoritative source of the driver's license is the driver's name associated with the license type and the face. Even if the resident certificate is changed, the driver's license is not linked. The driver's license is positioned to be a snapshot at a certain time (information cut at a certain time).

### <3.13 Data Held by Certificate Issuer>

The certificate issuer 2 does not hold the raw data used by the user at the time of application. Since it is user's and corresponds to personal information, only a value obtained by hashing raw data is managed. In other words, there may be a state in which the certificate data itself distributed to the user is managed as a backup. Since there is a possibility that the issued certificate data is based on the certificate data in the revocation list 71 as the source of trust (trust anchor), it is also assumed that it is the obligation of the issuer to retain and manage the certificate data issued in the past. There is a possibility that the transmitted certificate does not reach the user and a retransmission request is made, and thus it is considered that there is no problem to manage a set of certificate data.

Meanwhile, since the certificate data is available only when the private key corresponding to the public key included in the certificate is stored in the SE chip in the mobile terminal, the certificate issuer can appropriately delete the corresponding certificate data even in a case where the SE is replaced or the key in the SE is deleted at the time of model change.

In a specific "certificate reissuance" process, the currently attached signature portion is deleted, the public key information of the user is replaced, and the hash information from the user is reused from the past certificate information, so that the certificate can be reissued without newly obtaining information. In the data described in the certificate, the serial number (document number or license number) or the like of the certificate can be overwritten on the certificate issuer side. Similarly, for information that is not information from the user, data or a character string indicating reissuance can be input or the expiration date can be counted again from the reissuance date according to the issuance policy on the certificate issuer side.

As another way of thinking, raw data is received again from a wallet of the user, and hashed, so that it can be used as a confirmation flag for checking whether the same data is still registered in the wallet as compared with a hash value of a certificate in the past (before reissuance). In this confirmation, in a case where the data is different from the expected value, since the data held in the wallet by the user is different, the user cannot use the certificate even if the certificate is reissued. Therefore, a flow of prompting the user to use identification documents again for "new application" may be considered.

### <3.14 User Data in Wallet>

As described above, the wallet application 11 exists in the mobile phone 3. Personal information of the user is stored in a wallet, and the certificate issuer 2 issues a certificate called a mobile security object (MSO) based on this data.

For the data of the wallet, the data can be moved via an application of a carrier or a server like a model change of a normal application. In addition, there is a possibility that the Password manager mounted on the current mobile phone is extended to be able to store the personal information. In this case, it is easy to perform transition by model change together with account management of the Platformer as a function of the mobile OS instead of the wallet application 11.

The data managed in the wallet may include not only the four basic information items from Japan's basic resident register such as name, date of birth, sex, and address, but also various other types of data. This may include physical characteristics such as height, weight, hair color, eye color, sitting height, foot size, instep height, finger length, voice, voiceprint, fingerprint, iris, facial parts position information, eyeball capillary patterns, vein patterns of palm and the like, and backhand vein patterns, as well as feature points derived from these characteristics. Additionally, it can include date-of-birth-related information, such as zodiac signs, birthstones, gemstones, flowers, songs, colors, planets, or astrological and fortune-telling classifications assigned based on the birthdate. Furthermore, it can include preference-related information, such as favorite colors, favorite foods, preferred types of romantic partners, or favorite characters. It may also include information about owned items, such as the color, model, type, and customization details of owned vehicles. Finally, it can include alternative names, including religious names, aliases, trade names, pseudonyms, handles, nicknames, or call signs, which differ from the official registered name.

Until now, it has been common for such data to be held and managed by the Platformer side (mobile OS providers, application providers, or the like) without the user's knowledge and used without their consent. Going forward, a process will be constructed in which such data will only be shared after the collator (user) makes a detailed request for the desired data to be acquired and the user's consent is obtained for that request content.

### <3.15 Functional Block Diagram>

Next, functional block diagrams of the SE management server 33 and the mobile phone 3 according to the embodiment will be described.

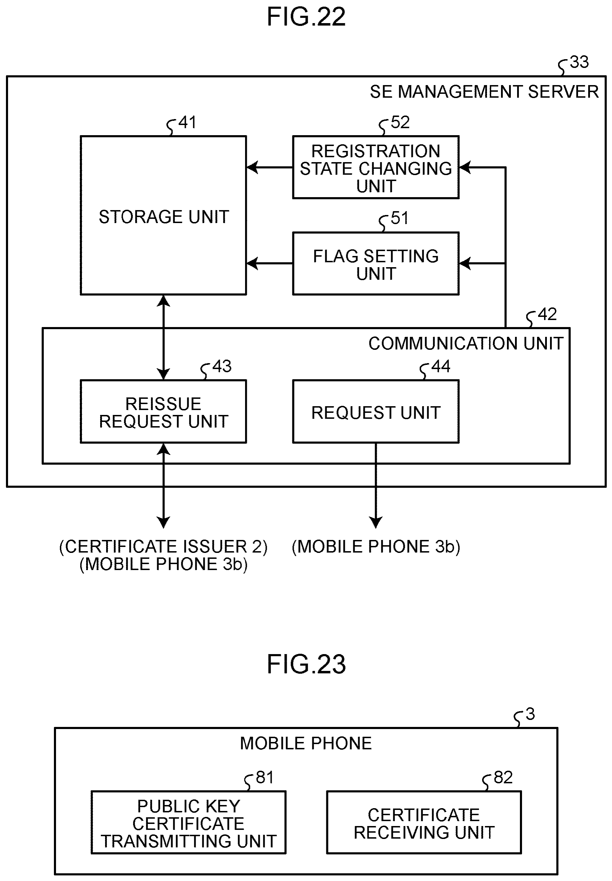

FIG. 22 is a functional block diagram illustrating functions of the SE management server 33 according to the embodiment. As illustrated in FIG. 22, the SE management server 33 includes a storage unit 41, a communication unit 42, a reissue request unit 43, a request unit 44, a flag setting unit 51, and a registration state changing unit 52.

As illustrated in FIGS. 18 and 19, the storage unit 41 stores the user ID, the first SEID of the first information device (mobile phone 3a) before the change with respect to the user ID, and the second SEID of the second information device (mobile phone 3b) after the change with respect to the user ID. The storage unit 41 stores the registered certificate for the user ID for each of the first SEID and the second SEID. The storage unit 41 may store the registration date and time of the registered certificate for the user ID for each of the first SEID and the second SEID. The storage unit 41 may store the vendor information linked with the SEID for each of the first SEID and the second SEID. The vendor information may include a vendor name and a root certificate.

The communication unit 42 communicates with an external device connected via a network such as the external mobile phone 3, the certificate issuer 2, and the authentication server 31. The communication unit 42 communicates with common middleware that communicates with a plurality of wallet applications of the second information device. The communication unit 42 receives the transition instruction for the registered certificate stored in the first information device from the second information device. The communication unit 42 includes the reissue request unit 43 and the request unit 44.

The reissue request unit 43 transmits an issuance request for requesting the certificate issuer to transmit the certificate stored in the first information device to the second information device having the second SEID stored in the storage unit 41 in association with the user ID. The reissue request unit 43 requests the certificate issuer 2 to reissue the certificate stored in the first information device on the basis of an instruction from the user. Upon receiving the permission for reissuance from the certificate issuer 2, the reissue request unit 43 transmits an issuance request to the second information device.

The request unit 44 outputs, to the second information device, an issuance request of the registered certificate for which the transition instruction has been given. The request unit 44 outputs a deletion request of the registered certificate for which the transition instruction has been issued to the first information device.

The flag setting unit 51 sets a new registration flag for the registered certificate of the second information device for the registered certificate for which the transition instruction has been issued in accordance with the transition instruction received by the communication unit. The flag setting unit 51 sets a deletion flag for the registered certificate of the first information device for which the transition instruction has been given.

In response to the issuance request, the registration state changing unit 52 determines that the registered certificate of the second information device stored in the storage unit 41 has been registered in a case where completion of issuance of the registered certificate requested for issuance is received from the second information device. In response to the deletion request, in a case where the deletion completion of the registered certificate requested to be deleted is received from the first information device, the registration state changing unit 52 deletes the registered certificate of the first information device stored in the storage unit 41.

FIG. 23 is a functional block diagram illustrating functions of the mobile phone 3 according to the embodiment. As illustrated in FIG. 23, the mobile phone 3 includes a public key certificate transmitting unit 81 and a certificate receiving unit 82.

In a case of receiving the issuance request from the SE management server 33, the public key certificate transmitting unit 81 transmits a public key certificate including the second SEID to the certificate issuer 2.

In response to the transmission of the public key certificate, the certificate receiving unit 82 receives a certificate including the public key and the second SEID from the certificate issuer 2. In a case where the second SEID included in the certificate matches the second SEID of the second information device, the certificate receiving unit 82 stores the certificate including the public key and the second SEID.

### <3.16 Operation Description>

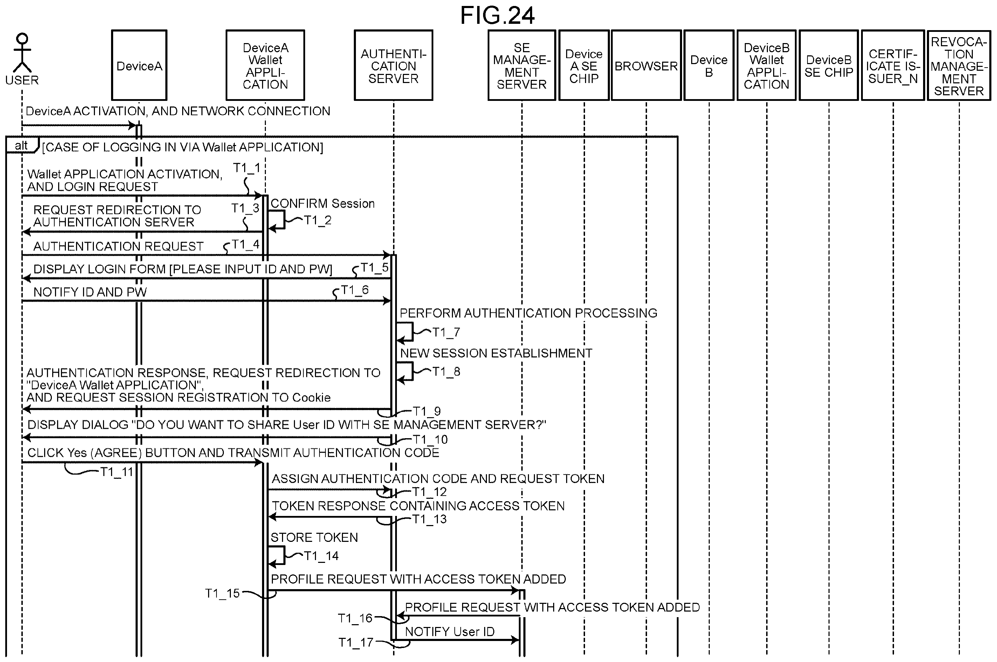

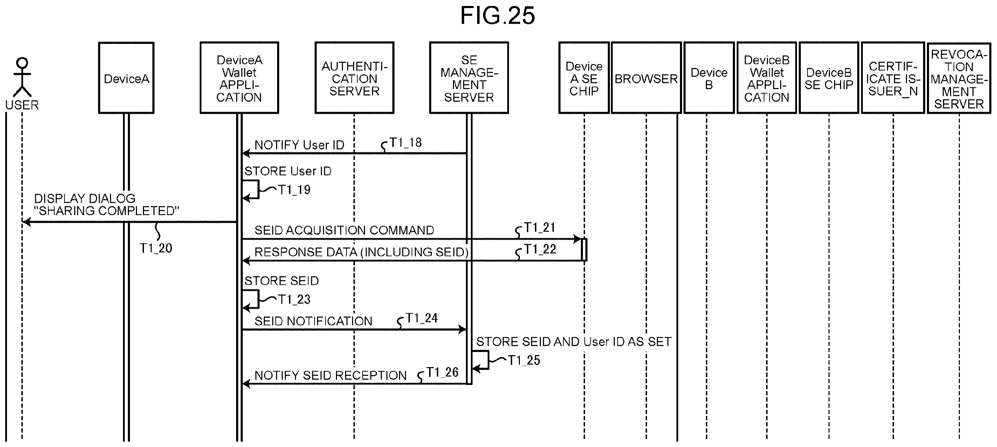

Next, an operation of the information processing system according to the embodiment will be described with reference to FIGS. 24 to 26. In FIGS. 24 to 26, it is assumed that Device A indicates the mobile phone 3a, the Device A wallet application indicates the wallet application 11a, the authentication server indicates the authentication server 31, the SE management server indicates the SE management server 33, the Device A SE chip indicates the SE area chip of the mobile phone 3a, Device B indicates the mobile phone 3b, the Device B wallet application indicates the wallet application 11b, and the Device B SE chip indicates the SE chip of the mobile phone 3b. The "target document" indicates, for example, an identity credential 21 which is a certificate.

FIGS. 24 to 25 are timing charts for explaining the operation in the case of logging in through the wallet application of Device A according to the embodiment. The user activates Device A to establish a network connection.

Next, the user activates the wallet application and requests login to the wallet application of Device A (T1_1).

If the wallet application of Device A does not confirm the previous session with the server (T1_2), the wallet application of Device A requests the user to redirect to the authentication server (T1_3). The user makes an authentication request from Device A to the authentication server (T1_4).

When an authentication request is made from the wallet application of Device A, the authentication server displays a login form "Please input ID and PW (password)" on Device A (T1_5).

The user inputs the ID and the PW according to the displayed login form, and notifies the authentication server of the ID and the PW from the wallet application of Device A (T1_6). The authentication server performs authentication processing on the notified ID and PW (T1_7), and after establishing a new session (T1_8), outputs an authentication response, a redirection request to the wallet application of Device A, and a session registration request to a cookie of Device A (T1_9).

Next, the authentication server displays a dialog "Do you want to share User ID with the SE management server?" by the wallet application of Device A (T1_10). When the user clicks the Yes (agree) button, the authentication code is transmitted to the wallet application of Device A (T1_11).

The wallet application of Device A assigns an authentication code to the authentication server and requests a token (T1_12). The authentication server returns a token response including the access token to the wallet application of Device A (T1_13). The wallet application of Device A stores the access token (T1_14), and makes a profile request to which the access token is given to the SE management server (T1_15).

Upon receiving the profile request from the wallet application of Device A, the SE management server outputs a profile request to which an access token is given to the authentication server (T1_16).

The authentication server notifies the SE management server of the user ID in response to the profile request from the SE management server (T1_17). When notified of the user ID from the authentication server, the SE management server notifies the wallet application of Device A of the user ID (T1_18).

The wallet application of Device A stores the user ID notified from the SE management server (T1_19). Then, the wallet application of Device A displays a dialog "sharing completed" to the user (T1_20).

Next, the wallet application of Device A outputs the SEID acquisition command to the Device A SE chip (T1_21). In response to the SEID acquisition command, the Device A SE chip returns response data including the SEID to the wallet application of Device A (T1_22). The wallet application of Device A stores the SEID (T1_23), and outputs the SEID notification to the SE management server (T1_24). The SE management server stores the SEID and the user ID as a set (T1_25), and notifies the wallet application of Device A of reception of the SEID (T1_26).

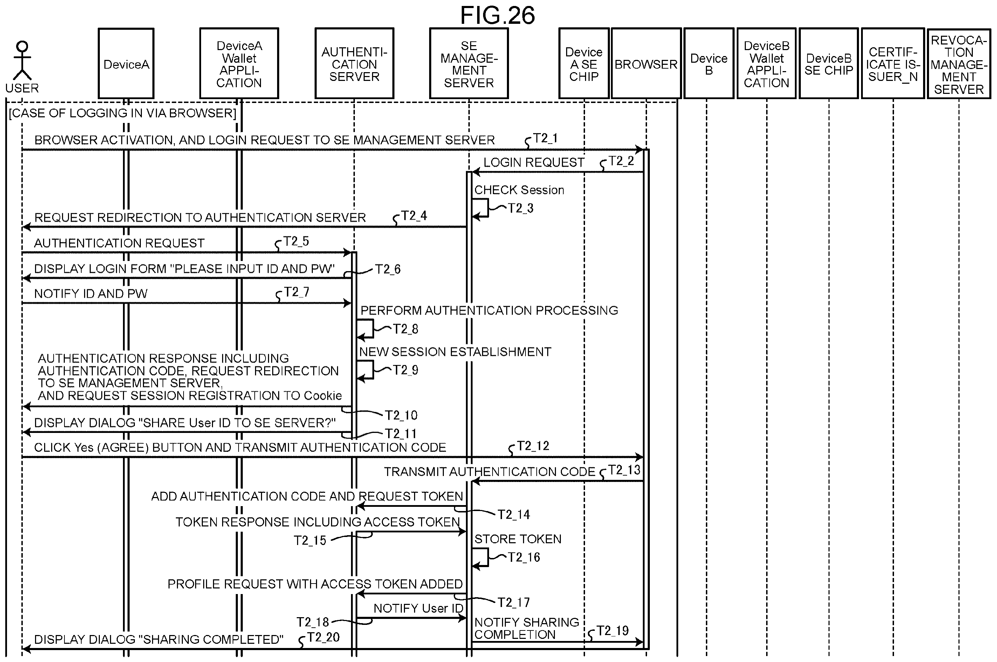

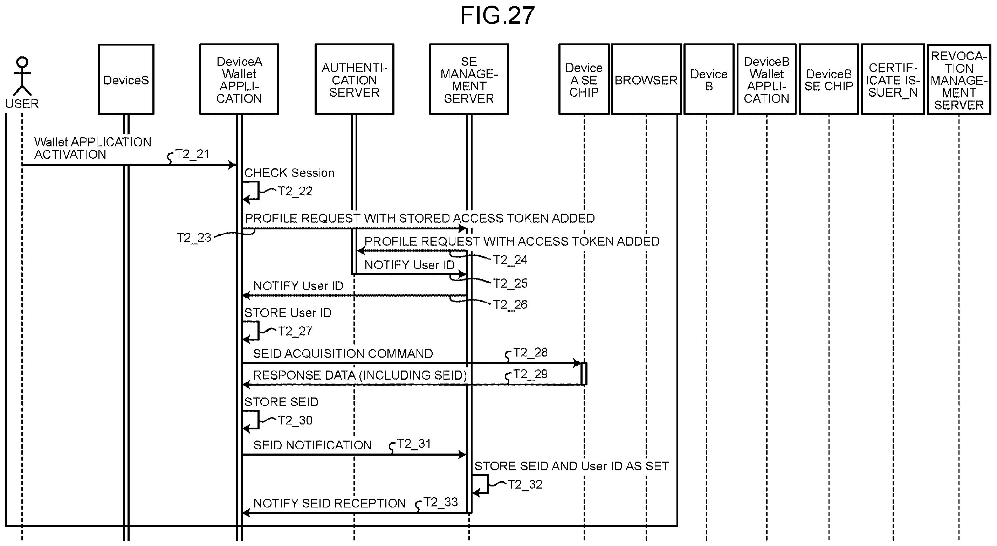

FIGS. 26 and 27 are timing charts for explaining the operation in the case of logging in via the browser of Device A according to the embodiment.

The user activates the browser and requests login to the SE management server (T2_1). The browser makes a login request to the SE management server (T2_2). The SE management server checks the session with the browser (T2_3) and requests the user to redirect to the authentication server (T2_4). The user makes an authentication request to the authentication server from the wallet application of Device A (T2_5).

When an authentication request is made from the wallet application of Device A, the authentication server displays a login form "Please input ID and PW (password)" on Device A (T2_6).

According to the displayed login form, the user inputs the ID and the PW, and notifies the authentication server of the ID and the PW from the wallet application of Device A (T2_7). The authentication server performs authentication processing on the notified ID and PW (T2_8), and after establishing a new session (T2_9), outputs an authentication response including an authentication code, a redirection request to the SE management server, and a session registration request to a cookie of Device A (T2_10).

Next, the authentication server displays a dialog "Do you want to share User ID with the SE management server?" by the wallet application of Device A (T2_11). When the user clicks the Yes (agree) button, the authentication code is transmitted to the browser of Device A (T2_12).

The browser of Device A transmits the authentication code to the SE management server (T2_13). The SE management server gives an authentication code to the authentication server and requests a token (T2_14). The authentication server outputs a token response including the access token to the SE management server (T2_15). The SE management server stores the access token (T2_16), and makes a profile request to which the access token is given to the authentication server (T2_17).

The authentication server notifies the SE management server of the user ID in response to the profile request from the SE management server (T2_18). When the user ID is notified from the authentication server, the SE management server notifies the browser of Device A of sharing completion of the user ID (T2_19). Then, the browser displays a dialog "sharing completed" to the user (T2_20).

Thereafter, the user activates the wallet application (T2_21). The wallet application of Device A checks the session with the user (T2_22), and makes a profile request to which the stored access token is given to the SE management server (T2_23).

Upon receiving the profile request from the wallet application of Device A, the SE management server outputs a profile request to which an access token is given to the authentication server (T2_24).

The authentication server notifies the SE management server of the user ID in response to the profile request from the SE management server (T2_25). When notified of the user ID from the authentication server, the SE management server notifies the wallet application of Device A of the user ID (T2_26).

The wallet application of Device A stores the user ID notified from the SE management server (T2_27), and outputs the SEID acquisition command to the Device A SE chip (T2_28). In response to the SEID acquisition command, the Device A SE chip returns response data including the SEID to the wallet application of Device A (T2_29). The wallet application of Device A stores the SEID (T2_30), and outputs the SEID notification to the SE management server (T2_31). The SE management server stores the SEID and the user ID as a set (T2_32), and notifies the wallet application of Device A of reception of the SEID (T2_33).

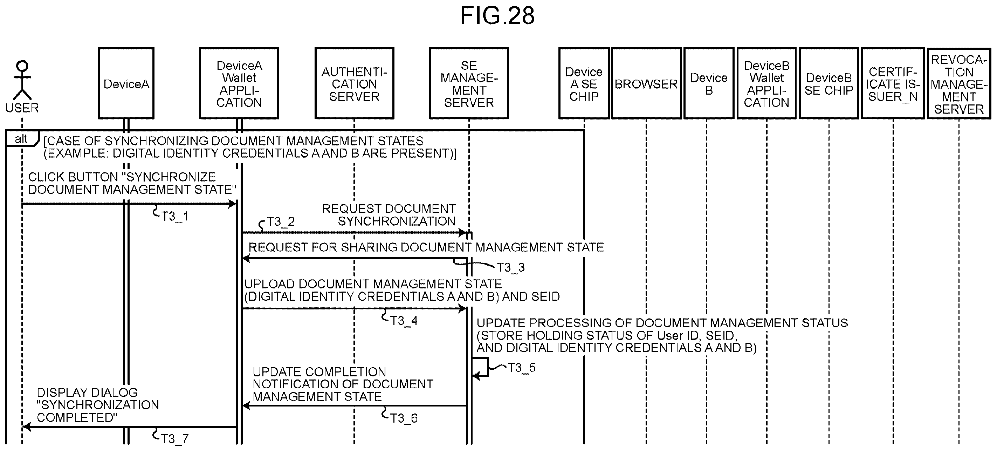

FIG. 28 is a timing chart for explaining an operation in a case where the document management states are synchronized (example: a case where digital identity credentials A and B are present) according to the embodiment.

When the user clicks a button "synchronize document management state" on the wallet application of Device A (T3_1), a request for document synchronization is output from the wallet application of Device A to the SE management server (T3_2).

In response to the document synchronization request, the SE management server requests the wallet application of Device A to share the document management state (T3_3).

In response to the request for sharing the document management state, the wallet application of Device A uploads the document management state (digital identity credentials A and B) and the SEID to the SE management server (T3_4).

The SE management server performs update processing of the document management status (T3_5). Specifically, the SE management server stores holding states of User ID, SEID, and digital identity credentials A and B.

Next, the SE management server outputs an update completion notification of the document management state to the wallet application of Device A (T3_6). The wallet application of Device A displays a dialog "synchronization completed" to the user (T3_7).

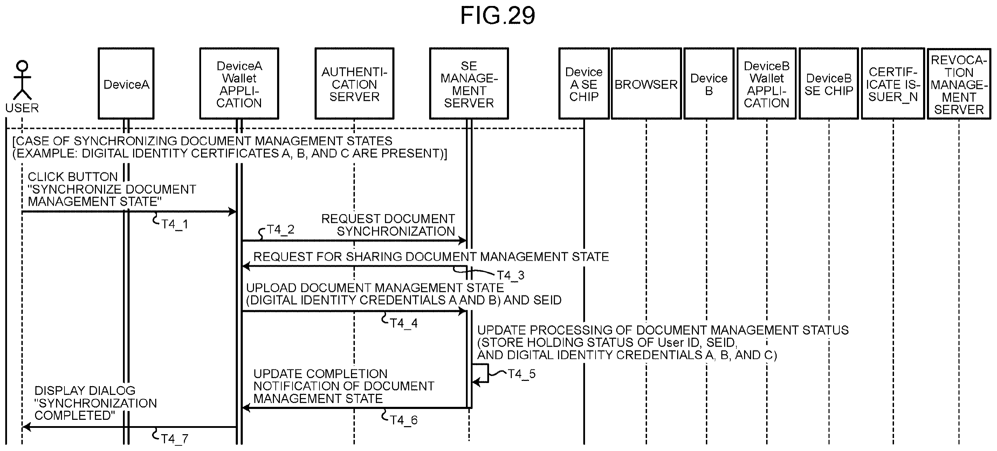

FIG. 29 is a timing chart for explaining an operation in a case where the document management states are synchronized (example: a case where digital identity credentials A, B, and C are present) according to the embodiment.

When the user clicks a button "synchronize document management state" on the wallet application of Device A (T4_1), a request for document synchronization is output from the wallet application of Device A to the SE management server (T4_2).

In response to the document synchronization request, the SE management server requests the wallet application of Device A to share the document management state (T4_3).

In response to the request for sharing the document management state, the wallet application of Device A uploads the document management state (digital identity credentials A, B, and C) and the SEID to the SE management server (T4_4).

The SE management server performs update processing of the document management status (T4_5). Specifically, the SE management server stores holding states of User ID, SEID, and digital identity credentials A, B, and C.

Next, the SE management server outputs an update completion notification of the document management state to the wallet application of Device A (T4_6). The wallet application of Device A displays a dialog "synchronization completed" to the user (T4_7).

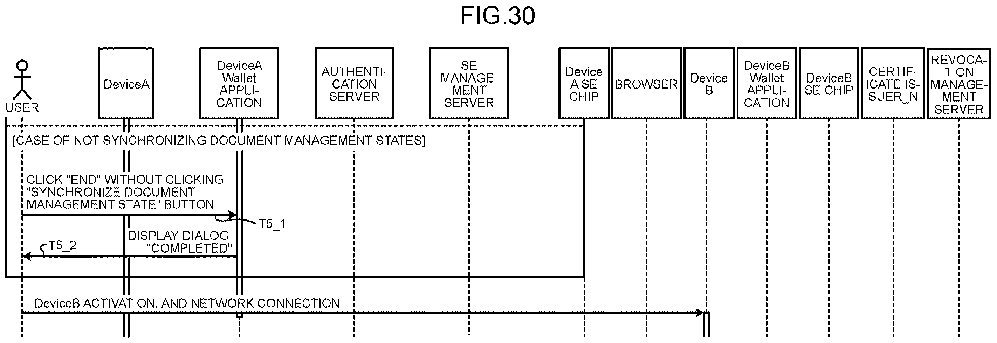

FIG. 30 is a timing chart for explaining an operation in a case where the document management states are not synchronized according to the embodiment.

When the user clicks "end" without clicking the button "synchronize document management state" on the wallet application of Device A (T5_1), the wallet application of Device A displays a dialog "completed" to the user (T5_2).

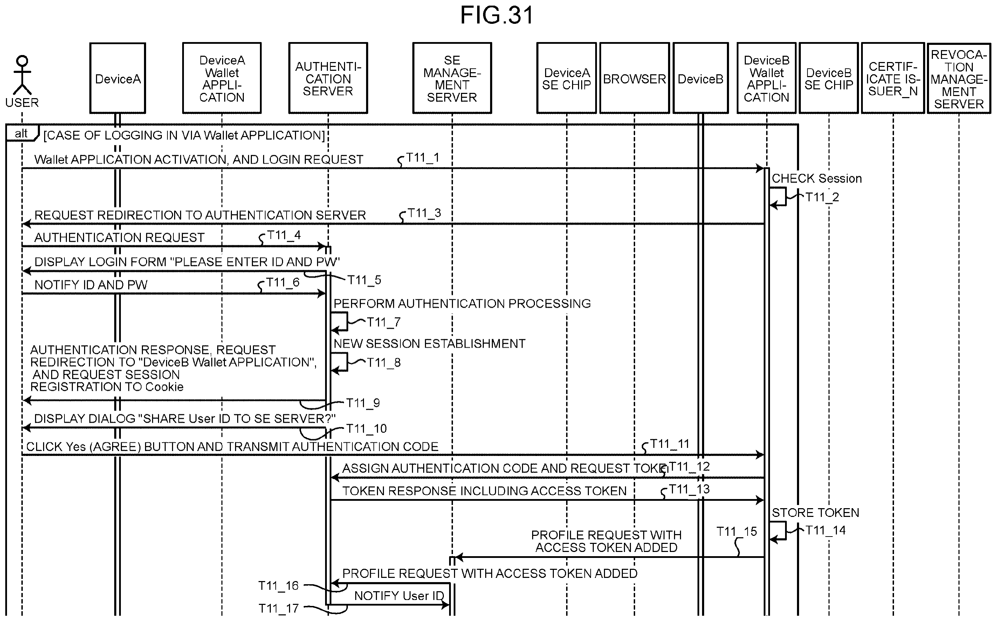

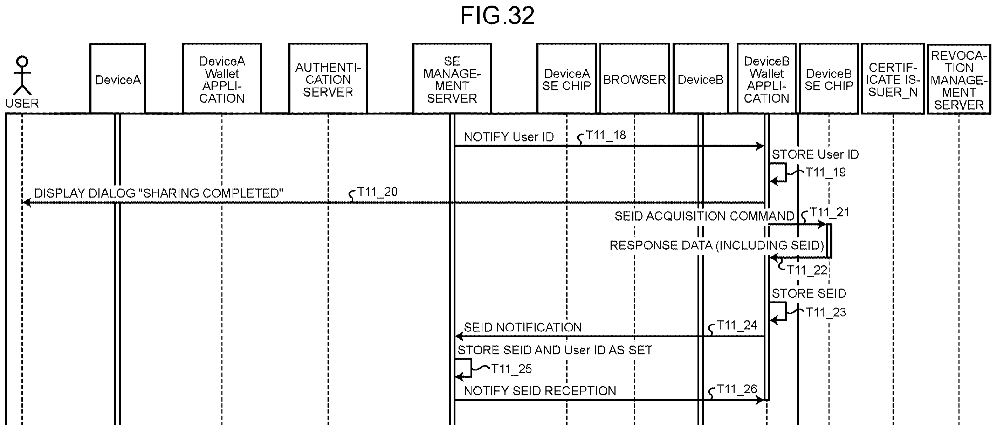

FIGS. 31 and 32 are timing charts for explaining the operation in the case of logging in through the wallet application of Device B according to the embodiment. The user activates Device B to establish a network connection.

Next, the user activates the wallet application and requests login to the wallet application of Device B (T11_1).

The wallet application of Device B checks the session with the server (T11_2) and requests the user to redirect to the authentication server (T11_3). The user makes an authentication request from Device B to the authentication server (T11_4).

When an authentication request is made from the wallet application of Device B, the authentication server displays a login form "Please input ID and PW (password)" on Device B (T11_5).

According to the displayed login form, the user inputs the ID and the PW, and notifies the authentication server of the ID and the PW from the wallet application of Device B (T11_6). The authentication server performs authentication processing on the notified ID and PW (T11_7), and after establishing a new session (T11_8), outputs an authentication response, a redirection request to the wallet application of Device B, and a session registration request to a cookie of Device B (T11_9).

Next, the authentication server displays a dialog "Do you want to share User ID with the SE management server?" by the wallet application of Device B (T11_10). When the user clicks the Yes (agree) button, the authentication code is transmitted to the wallet application of Device B (T11_11).

The wallet application of Device B assigns an authentication code to the authentication server and requests a token (T11_12). The authentication server returns a token response including the access token to the wallet application of Device B (T11_13). The wallet application of Device B stores the access token (T11_14), and makes a profile request to which the access token is given to the SE management server (T11_15).

Upon receiving the profile request from the wallet application of Device B, the SE management server outputs a profile request to which an access token is given to the authentication server (T11_16).

The authentication server notifies the SE management server of the user ID in response to the profile request from the SE management server (T11_17). When the user ID is notified from the authentication server, the SE management server notifies the wallet application of Device B of the user ID (T11_18).

The wallet application of Device B stores the user ID notified from the SE management server (T11_19). Then, the wallet application of Device B displays a dialog "sharing completed" to the user (T11_20).

Next, the wallet application of Device B outputs the SEID acquisition command to the Device B SE chip (T11_21). The Device B SE chip returns response data including the SEID to the wallet application of the Device B in response to the SEID acquisition command (T11_22). The wallet application of Device B stores the SEID (T11_23), and outputs the SEID notification to the SE management server (T11_24). The SE management server stores the SEID and the user ID as a set (T11_25), and notifies the wallet application of Device B of reception of the SEID (T11_26).

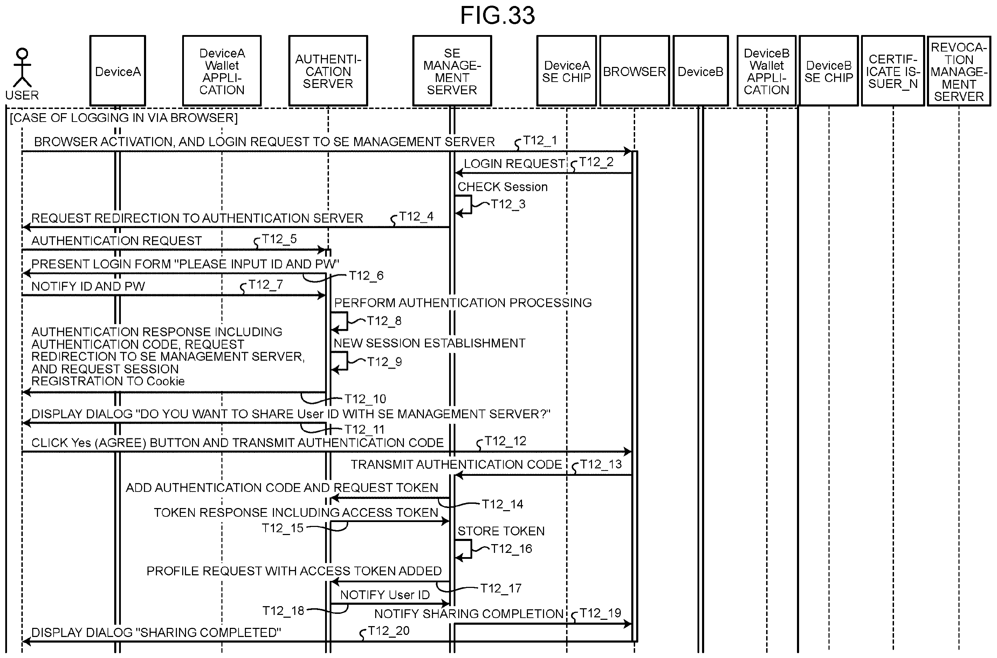

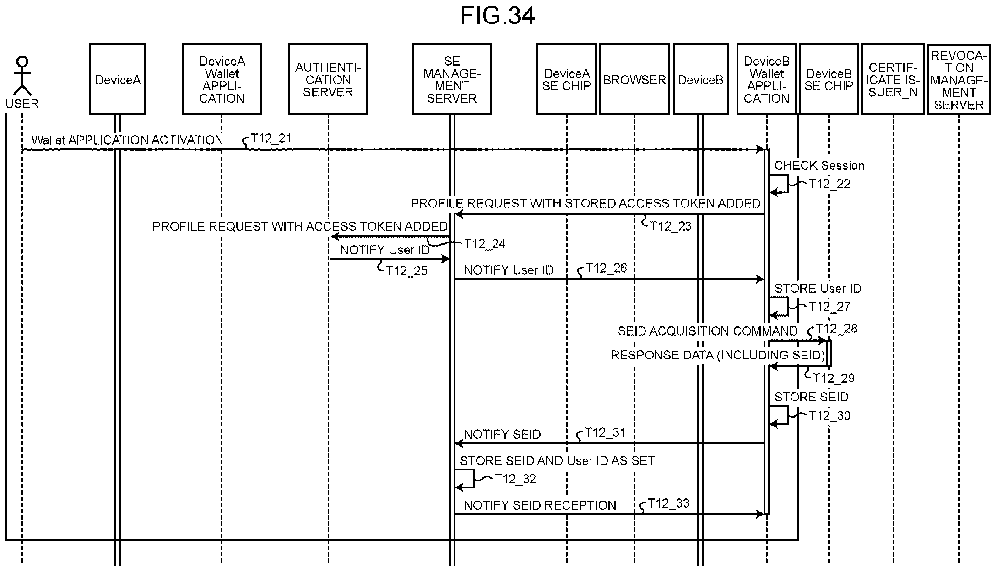

FIGS. 33 and 34 are timing charts for explaining the operation in the case of logging in via the browser of Device B according to the embodiment.

The user activates the browser and requests login to the SE management server (T12_1). The browser makes a login request to the SE management server (T12_2). The SE management server checks the session with the browser (T12_3) and requests the user to redirect to the authentication server (T12_4). The user makes an authentication request to the authentication server from the wallet application of Device B (T12_5).

When an authentication request is made from the wallet application of Device B, the authentication server displays a login form "Please input ID and PW (password)" on Device B (T12_6).

According to the displayed login form, the user inputs the ID and the PW, and notifies the authentication server of the ID and the PW from the wallet application of Device B (T12_7). The authentication server performs authentication processing on the notified ID and PW (T12_8), and after establishing a new session (T12_9), outputs an authentication response including an authentication code, a redirection request to the SE management server, and a session registration request to a cookie of Device B (T12_10).

Next, the authentication server displays a dialog "Do you want to share User ID with the SE management server?" by the wallet application of Device B (T12_11). When the user clicks the Yes (agree) button, the authentication code is transmitted to the browser of Device B (T12_12).

The browser of Device B transmits the authentication code to the SE management server (T12_13). The SE management server gives an authentication code to the authentication server and requests a token (T12_14). The authentication server outputs a token response including the access token to the SE management server (T12_15). The SE management server stores the access token (T12_16), and makes a profile request to which the access token is given to the authentication server (T12_17).

The authentication server notifies the SE management server of the user ID in response to the profile request from the SE management server (T12_18). When the user ID is notified from the authentication server, the SE management server notifies the browser of Device B of sharing completion of the user ID (T12_19). Then, the browser displays a dialog "sharing completed" to the user (T12_20).

Thereafter, the user activates the wallet application (T12_21). The wallet application of Device B checks the session with the server (T12_22), and makes a profile request to which the stored access token is given to the SE management server (T12_23).

Upon receiving the profile request from the wallet application of Device A, the SE management server outputs a profile request to which an access token is given to the authentication server (T12_24).

The authentication server notifies the SE management server of the user ID in response to the profile request from the SE management server (T12_25). When the user ID is notified from the authentication server, the SE management server notifies the wallet application of Device B of the user ID (T12_26).

The wallet application of Device B stores the user ID notified from the SE management server (T12_27), and outputs the SEID acquisition command to the Device B SE chip (T12_28). The Device B SE chip returns response data including the SEID to the wallet application of the Device B in response to the SEID acquisition command (T12_29). The wallet application of Device B stores the SEID (T12_30), and outputs the SEID notification to the SE management server (T12_31). The SE management server stores the SEID and the user ID as a set (T12_32), and notifies the wallet application of Device B of reception of the SEID (T12_33).

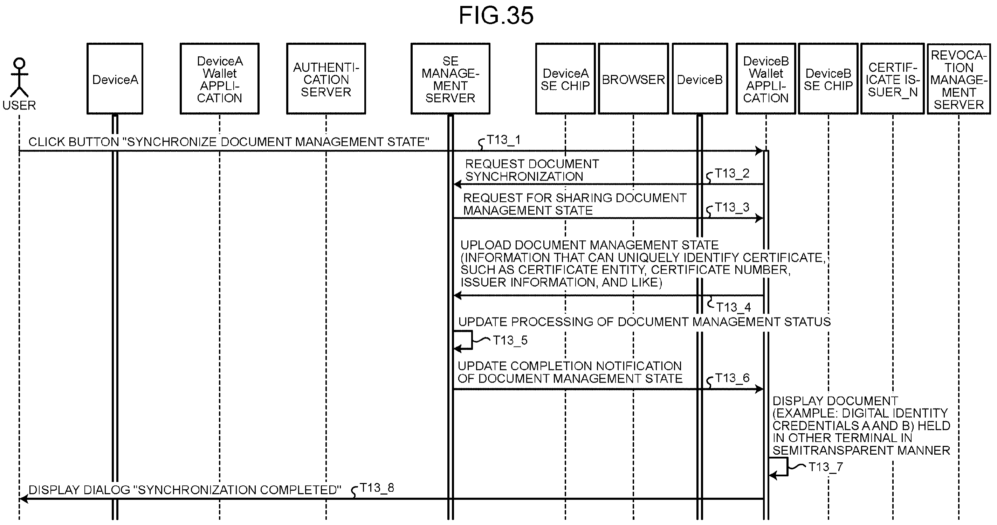

FIG. 35 is a timing chart for explaining an operation in a case of synchronizing a document management state according to the embodiment.

When the user clicks a button "synchronize document management state" on the wallet application of Device B (T13_1), a request for document synchronization is output from the wallet application of Device B to the SE management server (T13_2).

In response to the document synchronization request, the SE management server requests the wallet application of Device B to share the document management state (T13_3).

The wallet application of Device B uploads the document management state and the SEID to the SE management server in response to the sharing request of the document management state (T13_4).

The SE management server performs update processing of the document management status (T13_5).

Next, the SE management server outputs an update completion notification of the document management state to the wallet application of Device B (T13_6). The wallet application of Device B displays a document (for example, digital identity credentials A and B) held in another terminal in a semitransparent manner (T13_7), and displays a dialog "synchronization completed" to the user (T13_8).

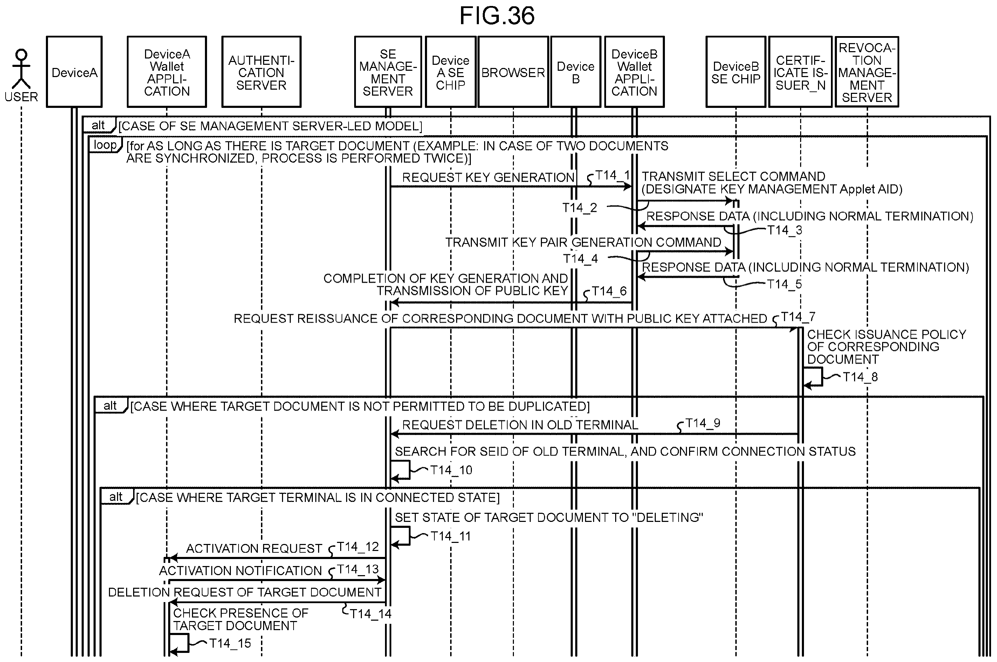

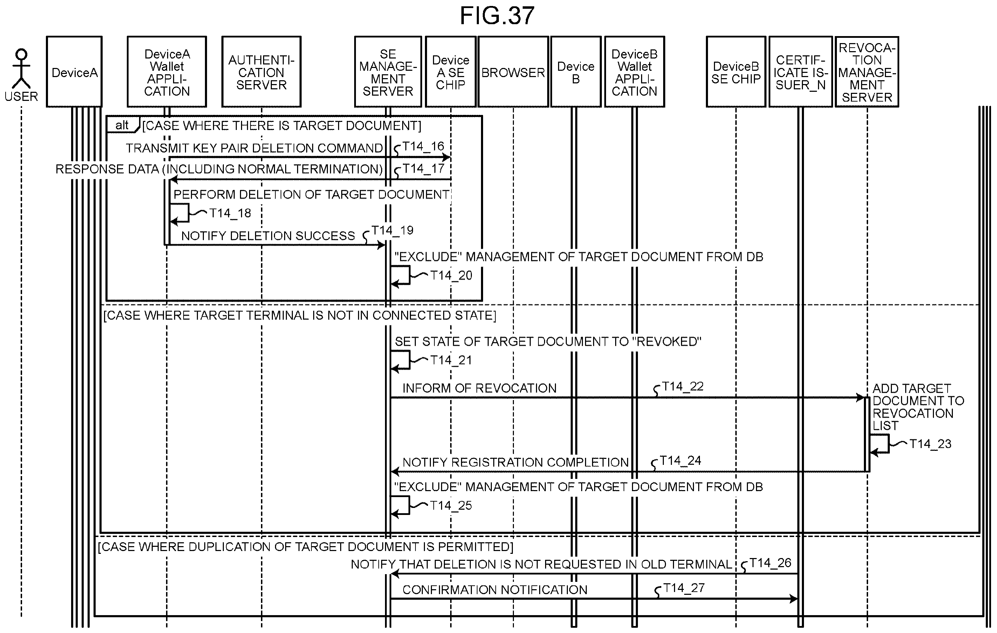

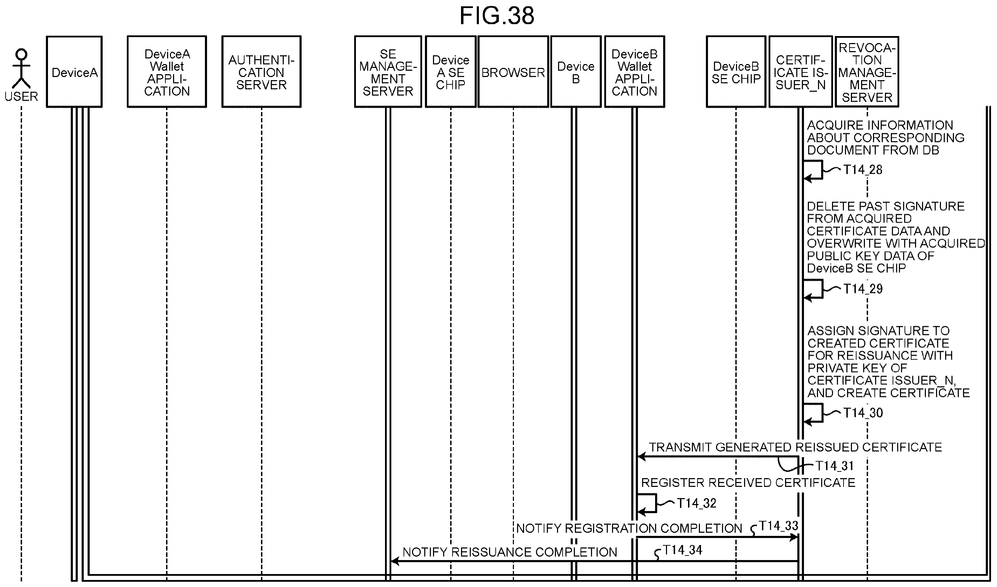

FIGS. 36 to 38 are timing charts for explaining the operation in the case of the SE management server-led model according to the embodiment. In FIG. 36, a portion surrounded by "loop" is repeated as long as there is a target document. For example, in a case where there are two target documents, execution is performed twice.

The SE management server requests the wallet application of Device B to generate a key (T14_1). The wallet application of Device B transmits a SELECT command (designating a key management Applet AID) to the Device B SE chip (T14_2). The AID is an abbreviation of Application ID, and is an identifier for uniquely identifying an applet defined by ISO/IEC 7816-5. The identifier is also assigned to the key management applet, and both the wallet application of Device A and the wallet application of Device B activate the applet using this AID. The method of activating an applet using this AID refers to the SELECT command defined by ISO/IEC 7816-4.

The Device B SE chip returns the response data (including normal termination) to the wallet application of the Device B (T14_3).

The wallet application of Device B transmits a key pair generation command to the Device B SE chip (T14_4). The Device B SE chip returns the response data (including normal termination) to the wallet application of the Device B (T14_5).

The wallet application of Device B completes the key generation and transmits the public key to the SE management server (T14_6). The SE management server requests the certificate issuer_N to reissue the document by attaching the received public key (T14_7).

In a case where the target document is not permitted to be duplicated, the certificate issuer_N checks the issuance policy of the document (T14_8) and requests the SE management server to delete the target document in the old terminal (T14_9). The SE management server searches for the SEID of the old terminal and checks the connection status of the old terminal (T14_10). In a case where the target terminal is in the connected state, the SE management server sets the state of the target document to "deleting" (T14_11).

The SE management server makes an activation request to the wallet application of Device A (T14_12).

The wallet application of Device A performs activation notification with the SE management server (T14_13).

The SE management server outputs a target document deletion request to the wallet application of Device A (T14_14). The wallet application of Device A checks the presence of the target document (T14_15).

In a case where there is a target document, the wallet application of Device A sends a key pair deletion command to the SE chip of Device A (T14_16). The SE chip of Device A returns response data (including normal termination) to the wallet application of Device A (T14_17).

The wallet application of Device A deletes the target document (T14_18), and notifies the SE management server of the successful deletion (T14_19). The SE management server "excludes" the management of the target document from the database 10 (T14_20).

In a case where the target terminal is not in the connected state, the SE management server sets the state of the target document to "invalid" (T14_21), and makes a revocation notification to the revocation management server (T14_22). The revocation management server adds the target document to the revocation list (T14_23) and notifies the SE management server of registration completion (T14_24). The SE management server "excludes" the management of the target document from the database 10 (T14_25).

In a case where the target document is permitted to be duplicated, the certificate issuer_N notifies the SE management server that deletion by the old terminal is not requested (T14_26). The SE management server outputs a confirmation notification to the certificate issuer_N in response to the notification that deletion in the old terminal is not requested (T14_27).

The certificate issuer_N acquires information of the document from the database 10 (T14_28), deletes a past signature from the acquired certificate data, and overwrites the information with the acquired public key data of the Device B SE chip to create a certificate for reissuance (T14_29).

The certificate issuer_N assigns a signature to the created certificate for reissuance using the private key of the certificate issuer_N (T14_30). The certificate issuer_N transmits the certificate for reissuance signed with the private key of the certificate issuer_N to the wallet application of Device B (T14_31).

The wallet application of Device B registers the received certificate (T14_32) and notifies the certificate issuer_N of registration completion (T14_33). The certificate issuer_N notifies the SE management server of the reissuance completion (T14_34).

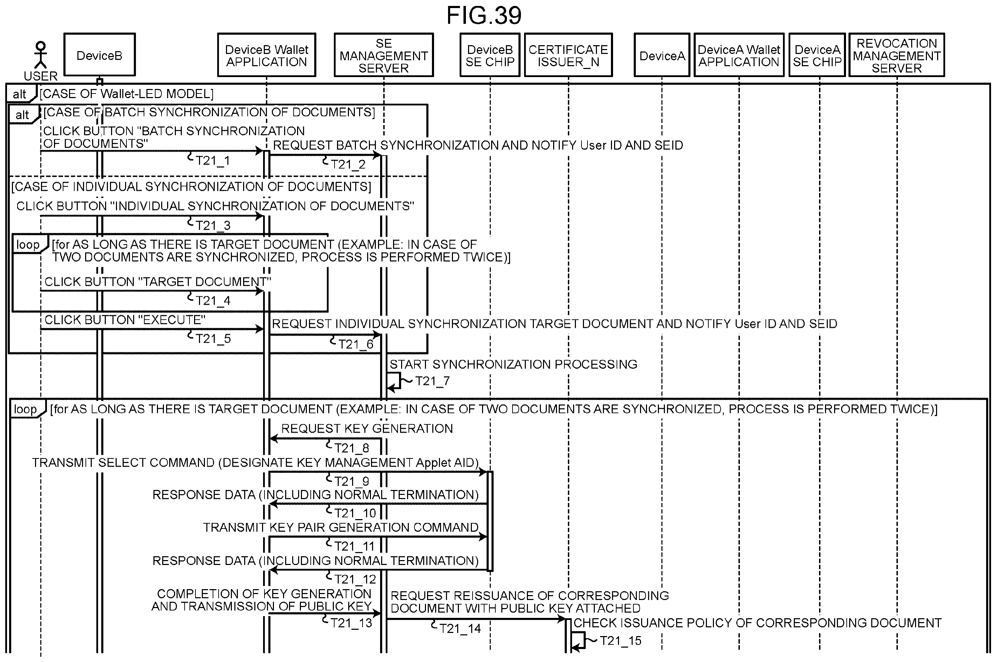

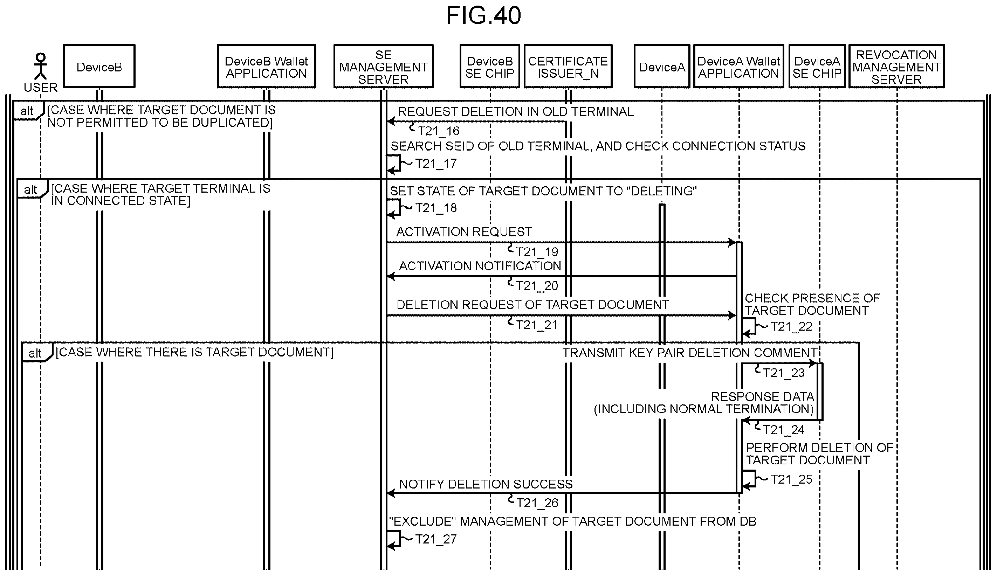

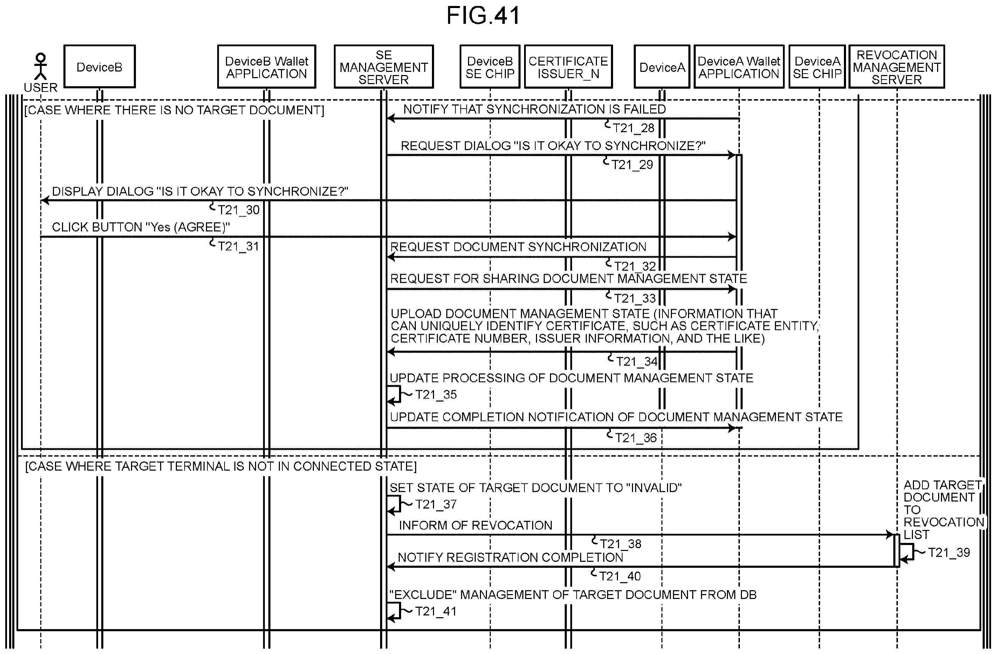

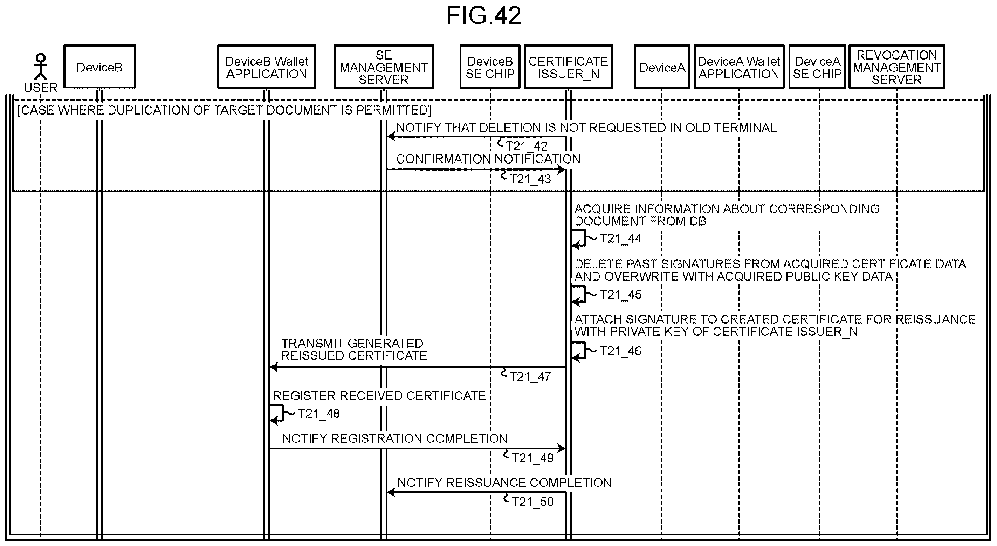

FIGS. 39 to 42 are timing charts for explaining the operation in the case of the batch synchronization of documents in the case of the wallet application 11-led model according to the embodiment.

In the case of batch synchronization of documents, when the user clicks a button "batch synchronization of documents" on the wallet application of Device B (T21_1), a batch synchronization request, User ID, and SEID are output from the wallet application of Device B to the SE management server (T21_2).

In the case of individual synchronization of documents, the user clicks a button "individual synchronization of documents" on the wallet application of Device B (T21_3). As illustrated in a portion surrounded by "loop", as long as there is a target document, the button "target document" is clicked (T21_4). For example, the operation is performed twice in a case where two synchronizations are performed.

The user clicks the "execute" button on the wallet application of Device B (T21_5). The wallet application of Device B requests a document to be individually synchronized, and User ID and SEID are output to the SE management server (T21_6). The SE management server starts synchronization processing (T21_7).

In FIGS. 39 to 42, the portion surrounded by the second "loop" from the top is repeated as long as there is a target document. For example, in a case where there are two target documents, execution is performed twice.

The SE management server requests the wallet application of Device B to generate a key (T21_8). The wallet application of Device B transmits a SELECT command (designating a key management Applet AID) to the Device B SE chip (T21_9).

The Device B SE chip returns the response data (including normal termination) to the wallet application of Device B (T21_10).

The wallet application of Device B transmits a key pair generation command to the Device B SE chip (T21_11). The Device B SE chip returns the response data (including normal termination) to the wallet application of Device B (T21_12).

The wallet application of Device B completes the key generation and transmits the public key to the SE management server (T21_13). The SE management server requests the certificate issuer_N to reissue the document with the public key attached (T21_14).

In a case where the target document is not permitted to be duplicated, the certificate issuer_N checks the issuance policy of the document (T21_15) and requests the SE management server to delete the target document in the old terminal (T21_16). The SE management server searches for the SEID of the old terminal and checks the connection status of the old terminal (T21_17). In a case where the target terminal is in the connected state, the SE management server sets the state of the target document to "deleting" (T21_18).

The SE management server makes an activation request to the wallet application of Device A (T21_19). The wallet application of Device A performs activation notification with the SE management server (T21_20).

The SE management server outputs a target document deletion request to the wallet application of Device A (T21_21). The wallet application of Device A checks the presence of the target document (T21_22).

In a case where there is a target document, the wallet application of Device A sends a key pair deletion command to the SE chip of Device A (T21_23). The SE chip of Device A returns response data (including normal termination) to the wallet application of Device A (T21_24).

The wallet application of Device A deletes the target document (T21_25), and notifies the SE management server of the successful deletion (T21_26). The SE management server "excludes" the management of the target document from the database 10 (T21_27).

In a case where there is no target document, the wallet application of Device A notifies the SE management server that the synchronization has failed (T21_28). The SE management server requests the wallet application of Device A to display a dialog "Is it okay to synchronize?" (T21_29).

When a dialog "Is it okay to synchronize?" is displayed on the wallet application of Device A (T21_30) and the user clicks the button "Yes (agree)" (T21_31), the wallet application of Device A requests the SE management server to synchronize the document (T21_32).

In response to the document synchronization request, the SE management server requests the wallet application of Device A to share the document management state (T21_33).

Relationship with the certificate management state in the claims. The wallet application of Device A uploads the document management state (information that can uniquely identify a certificate, such as a certificate entity, a certificate number, and issuance information, and the like) to the SE management server in response to the document management state sharing request (T21_34).

The SE management server performs update processing of the document management status (T21_35). Next, the SE management server outputs an update completion notification of the document management state to the wallet application of Device A (T21_36).

In a case where the target terminal is not in the connected state, the SE management server sets the state of the target document to "invalid" (T21_37), and makes a revocation notification to the revocation management server (T21_38). The revocation management server adds the target document to the revocation list (T21_39) and notifies the SE management server of registration completion (T21_40). The SE management server "excludes" the management of the target document from the database 10 (T21_41).

In a case where the target document is permitted to be duplicated, the certificate issuer_N notifies the SE management server that deletion by the old terminal is not requested (T21_42). The SE management server outputs a confirmation notification to the certificate issuer_N in response to the notification that deletion in the old terminal is not requested (T21_43).

The timing at which the reissue request unit 43 transmits the issuance request to the second information device in a case of receiving the permission for reissuance from the certificate issuer 2 corresponds to a flow of notifying the mobile phone 3, which is the second information device, after the certificate issuer 2 confirms the issuance policy. For example, timing T21_42 corresponds to a case where overlapping of the mobile phones 3 is allowed, and timing T21_16 corresponds to a case where overlapping is not allowed.

The certificate issuer_N acquires information of the document from the database 10 (T21_44), deletes a past signature from the acquired certificate data, and overwrites the information with the acquired public key data of the Device B SE chip to create a certificate for reissuance (T21_45).

The certificate issuer_N attaches a signature to the created certificate for reissuance with the private key of the certificate issuer_N to create a certificate for reissuance (T21_46). The certificate issuer_N transmits the certificate for reissuance signed with the private key of the certificate issuer_N to the wallet application of Device B (T21_47).

The wallet application of Device B registers the received certificate (T21_48) and notifies the certificate issuer_N of registration completion (T21_49). The certificate issuer_N notifies the SE management server of the reissuance completion (T21_50).

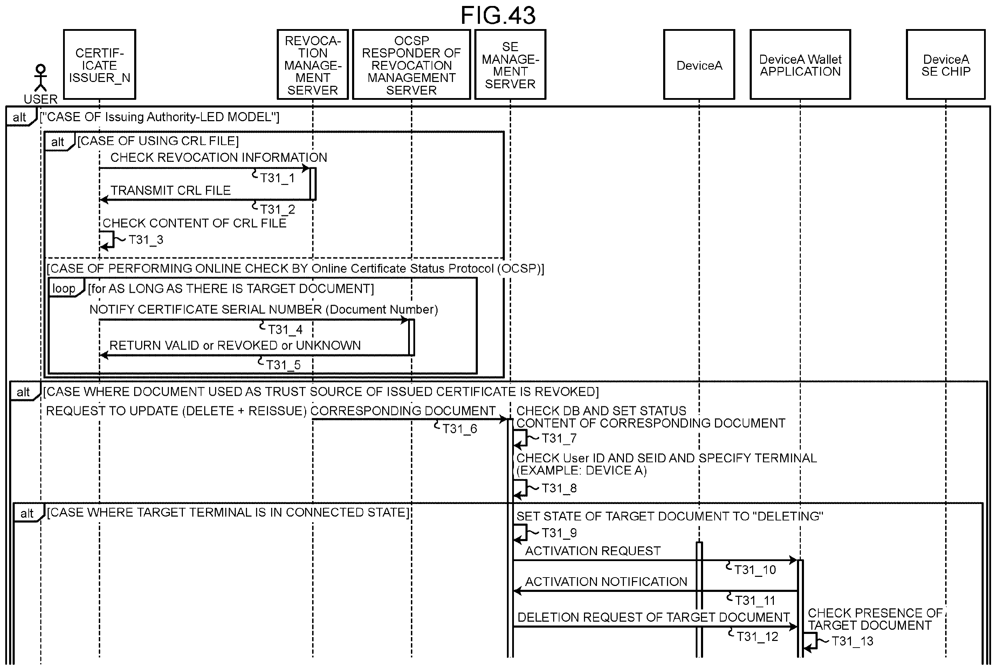

FIGS. 43 to 45 are timing charts for explaining the operation in the case of the certificate issuer-led model according to the embodiment.

In a case of using a certificate revocation list (CRL) file, the certificate issuer_N checks revocation information with the revocation management server (T31_1). The revocation management server transmits the CRL file to the certificate issuer_N in response to the confirmation of the revocation information (T31_2). The certificate issuer_N checks the contents of the transmitted CRL file (T31_3).

In a case where the online check by the online certificate status protocol (OCSP) is performed, the serial number (document Number) of the certificate is notified to the OCSP responder of the revocation management server (T31_4). The OCSP responder returns valid, revoked, or unknown for the certificate of the notified serial number (T31_5).

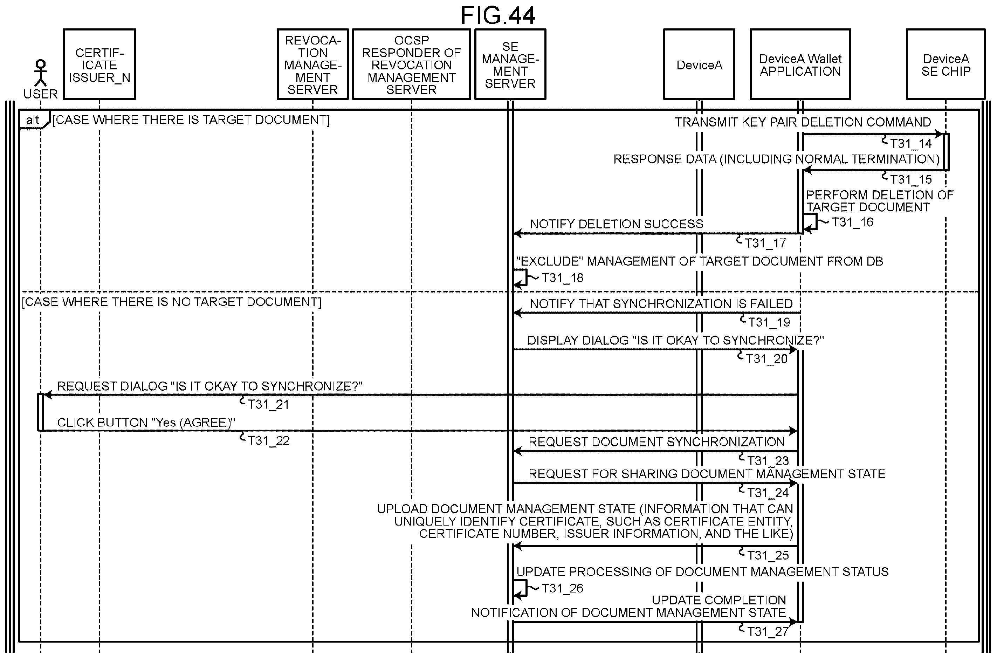

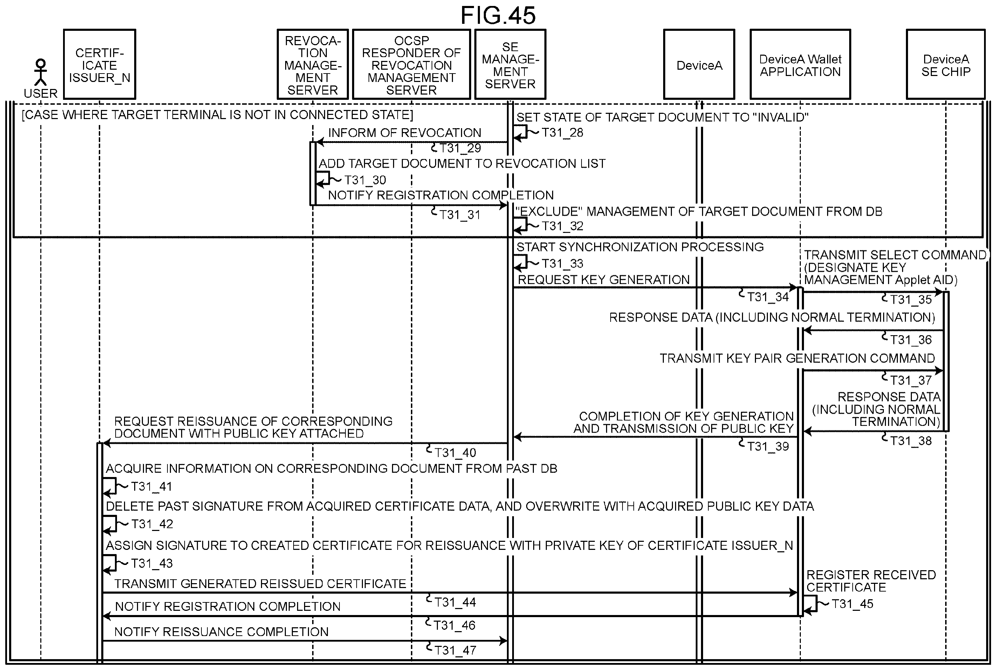

In FIGS. 44 and 45, a portion surrounded by "loop" is repeated as long as there is a target document. In addition, the OCSP is a protocol (communication protocol) defining a procedure for inquiring validity of a digital certificate (public key certificate) through a TCP/IP network.

In a case where the document used as the trust source of the issued certificate is revoked, the revocation management server requests the SE management server to update (delete + reissue) the document (T31_6).

The SE management server checks the database 10, sets the status of the document to "deleting" (T31_7), checks USER ID and SEID, and specifies the terminal (T31_8). For example, assume it is Device A.

In a case where the target terminal is in the connected state, the SE management server sets the document state to "deleting" (T31_9), and makes an activation request to the wallet application of Device A (T31_10). The wallet application of Device A performs activation notification with the SE management server (T31_11).

The SE management server outputs a target document deletion request to the wallet application of Device A (T31_12). The wallet application of Device A checks the presence of the target document (T31_13).

In a case where there is a target document, the wallet application of Device A sends a key pair deletion command to the SE chip of Device A (T31_14). The SE chip of Device A returns response data (including normal termination) to the wallet application of Device A (T31_15).

The wallet application of Device A deletes the target document (T31_16), and notifies the SE management server of the successful deletion (T31_17). The SE management server "excludes" the management of the target document from the database 10 (T31_18).

In a case where there is no target document, the wallet application of Device A notifies the SE management server that the synchronization has failed (T31_19). The SE management server requests the wallet application of Device A to display a dialog "Is it okay to synchronize?" (T31_20).

When a dialog "Is it okay to synchronize?" is displayed on the wallet application of Device A (T31_21) and the user clicks the button "Yes (agree)" (T31_22), the wallet application of Device A requests the SE management server to synchronize the document (T31_23).

In response to the document synchronization request, the SE management server requests the wallet application of Device A to share the document management state (T31_24).

Relationship with the certificate management state in the claims. The wallet application of Device A uploads the document management state (information that can uniquely identify a certificate, such as a certificate entity, a certificate number, and issuance information, and the like) to the SE management server in response to the document management state sharing request (T31_25).

The SE management server performs update processing of the document management status (T31_26). Next, the SE management server outputs an update completion notification of the document management state to the wallet application of Device A (T31_27).

In a case where the target terminal is not in the connected state, the SE management server sets the state of the target document to "invalid" (T31_28), and makes a revocation notification to the revocation management server (T31_29). The revocation management server adds the target document to the revocation list (T31_30) and notifies the SE management server of registration completion (T31_31). The SE management server "excludes" the management of the target document from the database 10 (T31_32).

The SE management server starts the synchronization processing (T31_33), and requests the wallet application of Device A to generate a key (T31_34). The wallet application of Device A transmits a SELECT command (designating the AID of the key management Applet A) to the Device A SE chip (T31_35).

The Device A SE chip returns the response data (including normal termination) to the wallet application of Device A (T31_36).

The wallet application of Device A transmits a key pair generation command to the Device A SE chip (T31_37). The Device A SE chip returns the response data (including normal termination) to the wallet application of Device A (T31_38).

The wallet application of Device A completes the key generation and transmits the public key to the SE management server (T31_39). The SE management server requests the certificate issuer_N to reissue the document with the public key attached (T31_40).

The certificate issuer_N acquires information of the document from the past database 10 (T31_41), deletes a past signature from the acquired certificate data, and overwrites the information with the acquired public key data of the Device A SE chip to create a certificate for reissuance (T31_42).

The certificate issuer_N assigns a signature to the created certificate for reissuance using the private key of the certificate issuer_N (T31_43). The certificate issuer_N transmits the certificate for reissuance signed with the private key of the certificate issuer_N to the wallet application of Device A (T31_44).

The wallet application of Device A registers the received certificate (T31_45) and notifies the certificate issuer_N of registration completion (T31_46). The certificate issuer_N notifies the SE management server of the reissuance completion (T31_47).

### <3.17 Hardware Configuration>

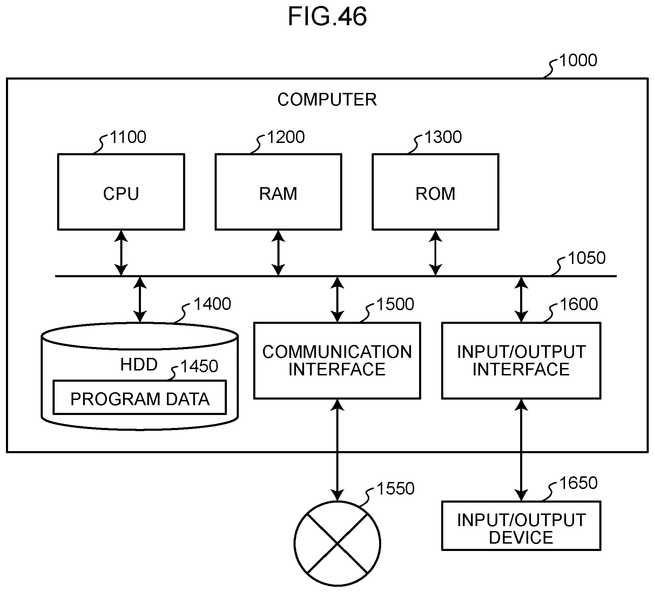

The information devices such as the SE management server 33 and the authentication server 31 according to each embodiment described above are realized by the computer 1000 having a configuration as illustrated in FIG. 46, for example. Hereinafter, the SE management server 33 according to the embodiment will be described as an example. FIG. 46 is a hardware configuration diagram illustrating an example of the computer 1000 that implements the functions of the SE management server 33. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records an SE management processing program according to the present disclosure as an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting the input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the SE management server 33 according to the first embodiment, the CPU 1100 of the computer 1000 executes the image processing program loaded on the RAM 1200 to implement the functions of the reissue request unit 43 and the like. In addition, the HDD 1400 stores an SE management processing program according to the present disclosure and data in the content storage unit 121. Note that the CPU 1100 reads the program data 1450 from the HDD 1400 and executes the program data, but as another example, these programs may be acquired from another apparatus via the external network 1550.

Although the preferred embodiments of the present disclosure have been described above in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. That is, the technology according to the present disclosure can exhibit other effects obvious to those skilled in the art from the description of the present specification together with or instead of the above effects.

Note that the present technology can also have the following configurations.
(1) An information processing apparatus comprising:
   a storage unit that stores a user ID, a first SEID of a first information device before a change with respect to the user ID, and a second SEID of a second information device after a change with respect to the user ID; and
   a reissue request unit that transmits an issuance request for requesting a certificate issuer for a certificate stored in the first information device to the second information device having the second SEID stored in the storage unit.
(2) The information processing apparatus according to (1), wherein the reissue request unit is configured to
   request the certificate issuer to reissue the certificate stored in the first information device on a basis of an instruction from a user.
(3) The information processing apparatus according to (1) or (2), wherein the storage unit stores a part of a certificate for the user ID for each of the first SEID and the second SEID.
(4) The information processing apparatus according to (3), wherein the storage unit stores registration date and time of the certificate for the user ID for each of the first SEID and the second SEID.
(5) The information processing apparatus according to (3) or (4), wherein the storage unit stores vendor information associated with the first SEID and vendor information associated with the second SEID.
(6) The information processing apparatus according to (5), wherein the vendor information includes a vendor name and a root certificate.
(7) The information processing apparatus according to any one of (1) to (6), wherein the reissue request unit is configured to
   transmit the issuance request to the second information device in a case where permission for reissuance is received from the certificate issuer.
(8) The information processing apparatus according to any one of (1) to (7), further comprising a communication unit that performs communication with common middleware that performs communication with a plurality of wallet applications of the second information device.
(9) The information processing apparatus according to (8), wherein the communication unit receives a transition instruction for the certificate stored in the first information device from the second information device, the information processing apparatus further comprising:
   a flag setting unit that sets a new registration flag for the certificate of the second information device for the certificate for which the transition instruction has been issued in accordance with the transition instruction received by the communication unit;
   a request unit that outputs, to the second information device, the issuance request of the certificate for which the transition instruction has been issued; and
   a registration state changing unit that, in a case where completion of issuance of the certificate for which the issuance request has been made is received from the second information device in response to the issuance request, determines that the certificate of the second information device stored in the storage unit has been registered.
(10) The information processing apparatus according to (9), wherein the flag setting unit sets a deletion flag for the certificate of the first information device for which the transition instruction has been issued,
   the request unit outputs, to the first information device, a request for deleting the certificate for which the transition instruction has been issued, and
   the registration state changing unit deletes the certificate of the first information device stored in the storage unit in a case where deletion completion of the certificate for which deletion request has been made is received from the first information device in response to the deletion request.
(11) An information processing system comprising:
   the information processing apparatus according to (1);
      and
   an authentication server that authenticates the user ID and a password of the user ID.
(12) An information processing system comprising:
   the information processing apparatus according to (1);
      and
   the second information device, wherein
   the second information device includes:
      a public key certificate transmitting unit that transmits a public key certificate including a public key and the second SEID to the certificate issuer in a case where an issuance request is received from the information processing apparatus; and
      a certificate receiving unit that receives a certificate including the public key and the second SEID from the certificate issuer in response to transmission of the public key certificate.
(13) The information processing system according to (12), wherein the certificate receiving unit stores the certificate including the public key and the second SEID in a case where the second SEID included in the certificate matches the second SEID of the second information device.
(14) An information processing apparatus comprising: a public key certificate transmitting unit that transmits a public key certificate including a second SEID of a second information device after a change from a first information device to a certificate issuer in a case where an issuance request is received from an SE management server; and
   a certificate receiving unit that receives a certificate including a public key and the second SEID from the certificate issuer in response to transmission of the public key certificate.
(15) An information processing method in an information processing apparatus including a storage unit that stores a user ID, a first SEID of a first information device before a change with respect to the user ID, and a second SEID of a second information device after a change with respect to the user ID,
   the information processing method comprising
   transmitting an issuance request for requesting a certificate issuer for a certificate stored in the first information device to the second information device having the second SEID stored in the storage unit.
(16) A program in an information processing apparatus including a storage unit that stores a user ID, a first SEID of a first information device before a change with respect to the user ID, and a second SEID of a second information device after a change with respect to the user ID,
   the program causing
   the information processing apparatus to execute
   transmitting an issuance request for requesting a certificate issuer for a certificate stored in the first information device to the second information device having the second SEID stored in the storage unit.

### Reference Signs List

1 USER
2 CERTIFICATE ISSUER
3, 3a, 3b MOBILE PHONE
10, 10', 10'', 10‴, 10ʺʺ DATABASE
11, 11a, 11b WALLET APPLICATION
12, 12a, 12b KEY MANAGEMENT APPLET
21 IDENTITY CREDENTIAL
22 KEY PAIR
23a PUBLIC KEY
23b PRIVATE KEY
31 AUTHENTICATION SERVER
32 ATTRIBUTE DATABASE
33 SE MANAGEMENT SERVER
41 STORAGE UNIT
42 COMMUNICATION UNIT
43 REISSUE REQUEST UNIT
44 REQUEST UNIT
51 FLAG SETTING UNIT
52 REGISTRATION STATE CHANGING UNIT
61 SE MANAGEMENT MIDDLEWARE
71 REVOCATION LIST
81 PUBLIC KEY CERTIFICATE TRANSMITTING UNIT
82 CERTIFICATE RECEIVING UNIT
101 INFORMATION PROCESSING SYSTEM

## Claims

1. An information processing apparatus comprising:
a storage unit that stores a user ID, a first SEID of a first information device before a change with respect to the user ID, and a second SEID of a second information device after a change with respect to the user ID; and
a reissue request unit that transmits an issuance request for requesting a certificate issuer for a certificate stored in the first information device to the second information device having the second SEID stored in the storage unit.

2. The information processing apparatus according to claim 1, wherein the reissue request unit is configured to
request the certificate issuer to reissue the certificate stored in the first information device on a basis of an instruction from a user.

3. The information processing apparatus according to claim 1, wherein the storage unit stores a part of a certificate for the user ID for each of the first SEID and the second SEID.

4. The information processing apparatus according to claim 3, wherein the storage unit stores registration date and time of the certificate for the user ID for each of the first SEID and the second SEID.

5. The information processing apparatus according to claim 3, wherein the storage unit stores vendor information associated with the first SEID and vendor information associated with the second SEID.

6. The information processing apparatus according to claim 5, wherein the vendor information includes a vendor name and a root certificate.

7. The information processing apparatus according to claim 1, wherein the reissue request unit is configured to
transmit the issuance request to the second information device in a case where permission for reissuance is received from the certificate issuer.

8. The information processing apparatus according to claim 1, further comprising a communication unit that performs communication with common middleware that performs communication with a plurality of wallet applications of the second information device.

9. The information processing apparatus according to claim 8, wherein the communication unit receives a transition instruction for the certificate stored in the first information device from the second information device, the information processing apparatus further comprising:
a flag setting unit that sets a new registration flag for the certificate of the second information device for the certificate for which the transition instruction has been issued in accordance with the transition instruction received by the communication unit;
a request unit that outputs, to the second information device, the issuance request of the certificate for which the transition instruction has been issued; and
a registration state changing unit that, in a case where completion of issuance of the certificate for which the issuance request has been made is received from the second information device in response to the issuance request, determines that the certificate of the second information device stored in the storage unit has been registered.

10. The information processing apparatus according to claim 9, wherein the flag setting unit sets a deletion flag for the certificate of the first information device for which the transition instruction has been issued,
the request unit outputs, to the first information device, a request for deleting the certificate for which the transition instruction has been issued, and
the registration state changing unit deletes the certificate of the first information device stored in the storage unit in a case where deletion completion of the certificate for which deletion request has been made is received from the first information device in response to the deletion request.

11. An information processing system comprising:
the information processing apparatus according to claim 1; and
an authentication server that authenticates the user ID and a password of the user ID.

12. An information processing system comprising:
the information processing apparatus according to claim 1; and
the second information device, wherein
the second information device includes:
a public key certificate transmitting unit that transmits a public key certificate including a public key and the second SEID to the certificate issuer in a case where an issuance request is received from the information processing apparatus; and
a certificate receiving unit that receives a certificate including the public key and the second SEID from the certificate issuer in response to transmission of the public key certificate.

13. The information processing system according to claim 12, wherein the certificate receiving unit stores the certificate including the public key and the second SEID in a case where the second SEID included in the certificate matches the second SEID of the second information device.

14. An information processing apparatus comprising: a public key certificate transmitting unit that transmits a public key certificate including a second SEID of a second information device after a change from a first information device to a certificate issuer in a case where an issuance request is received from an SE management server; and
a certificate receiving unit that receives a certificate including a public key and the second SEID from the certificate issuer in response to transmission of the public key certificate.

15. An information processing method in an information processing apparatus including a storage unit that stores a user ID, a first SEID of a first information device before a change with respect to the user ID, and a second SEID of a second information device after a change with respect to the user ID,
the information processing method comprising transmitting an issuance request for requesting a certificate issuer for a certificate stored in the first information device to the second information device having the second SEID stored in the storage unit.

16. A program in an information processing apparatus including a storage unit that stores a user ID, a first SEID of a first information device before a change with respect to the user ID, and a second SEID of a second information device after a change with respect to the user ID,
the program causing
the information processing apparatus to execute
transmitting an issuance request for requesting a certificate issuer for a certificate stored in the first information device to the second information device having the second SEID stored in the storage unit.
